(19) Europäisches Patentamt
European Patent Office
Office européen des brevets

(11) **EP 4 661 543 A1**

(12) **EUROPEAN PATENT APPLICATION**
published in accordance with Art. 153(4) EPC

(43) Date of publication:
**10.12.2025 Bulletin 2025/50**

(21) Application number: **24759595.2**

(22) Date of filing: **08.02.2024**

(51) International Patent Classification (IPC):
**H04W 72/0446** $^{(2023.01)}$

(52) Cooperative Patent Classification (CPC):
**H04B 7/06; H04B 17/309; H04W 24/10;**
**H04W 72/0446; H04W 72/542**

(86) International application number:
**PCT/CN2024/076915**

(87) International publication number:
**WO 2024/174918 (29.08.2024 Gazette 2024/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.02.2023 CN 202310215095**

(71) Applicant: **Huawei Technologies Co., Ltd.**
**Shenzhen, Guangdong 518129 (CN)**

(72) Inventors:
• **LI, Ting**
  **Shenzhen, Guangdong 518129 (CN)**
• **WANG, Xiaohan**
  **Shenzhen, Guangdong 518129 (CN)**
• **GAO, Junhui**
  **Shenzhen, Guangdong 518129 (CN)**
• **JIN, Huangping**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **CHANNEL STATE INFORMATION MEASUREMENT PARAMETER DETERMINATION METHOD, AND RELATED APPARATUS**

(57) This application provides a method for determining a channel state information measurement parameter and a related apparatus. The method includes: A terminal device receives, from a network device, a quantity $N_{TRP}$ of reference signal resources used for channel state information (channel state information, CSI) measurement, where a CSI reporting type is aperiodic CSI reporting, and $N_{TRP}$ is a positive integer greater than or equal to 1. The terminal device determines a time domain position of a CSI reference resource based on first information. The technical solutions provided in this application can increase a success rate of reporting CSI by the terminal device.

FIG. 4

## Description

This application claims priority to Chinese Patent Application No. 202310215095.8, filed with the China National Intellectual Property Administration on February 25, 2023, and entitled "METHOD FOR DETERMINING CHANNEL STATE INFORMATION MEASUREMENT PARAMETER AND RELATED APPARATUS", which is incorporated herein by reference in its entirety.

## TECHNICAL FIELD

This application relates to the field of wireless communication technologies, and in particular, to a method for determining a channel state information measurement parameter and a related apparatus.

## BACKGROUND

Channel state information (channel state information, CSI) is a key parameter that reflects channel quality, and is very important in a wireless communication process. In wireless communication, channel measurement and interference measurement are usually implemented by detecting a reference signal. For example, quality and interference of a downlink channel may be measured by using a channel state information reference signal (channel state information reference signal, CSI-RS). Specifically, a network device may send a CSI-RS to a terminal device, the terminal device calculates CSI based on the received CSI-RS and reports the CSI to the network device, and the network device may determine a channel state based on the received CSI.

To improve throughput performance of a communication system and user experience, a plurality of transmission reception points (transmission reception point, TRP) may serve one user equipment in a multi-station collaboration manner. There are many multi-station collaboration manners, for example, coherent joint transmission (coherent joint transmission, CJT) and non-coherent joint transmission (non-coherent joint transmission, NCJT). In the CJT collaboration manner, a plurality of TRPs may simultaneously serve a terminal device. In this case, the terminal device needs to report joint CSI of the plurality of TRPs, to enable coherent joint transmission of the plurality of TRPs. Measurement and computation on the joint CSI of the plurality of TRPs are relatively complex, significantly challenging implementation of the terminal device. How to ensure that the terminal device has sufficient time to complete CSI measurement and computation to ensure a success rate of reporting CSI by the terminal device is an urgent problem to be resolved.

## SUMMARY

Embodiments of this application provide a method for determining a CSI measurement parameter and a related apparatus, which may include a method for determining a CSI reference resource and a related apparatus, and a method for determining a time domain position interval and a related apparatus. Embodiments of this application can increase a success rate of reporting CSI by a terminal device.

According to a first aspect, this application provides a method for determining a CSI reference resource. The method may be applied to a terminal device, an apparatus (for example, a chip, a chip system, or a circuit) in the terminal device, or an apparatus that can be used in collaboration with the terminal device. An example in which the method is applied to the terminal device is used below for description. The method may include: The terminal device receives first information from a network device, where the first information indicates a quantity $N_{TRP}$ of reference signal resources used for CSI measurement, a CSI reporting type is aperiodic CSI reporting, and $N_{TRP}$ is a positive integer greater than or equal to 1. The terminal device determines a time domain position of the CSI reference resource based on the first information.

In the solution provided in this application, the terminal device may determine the time domain position of the CSI reference resource based on the quantity $N_{TRP}$, that is indicated by the first information from the network device, of reference signal resources used for CSI measurement, where the CSI reporting type is the aperiodic reporting. Currently, joint CSI feedback corresponding to a plurality of reference signal resources is not considered for a predefined time domain position value of the CSI reference resource, which may cause a problem that the terminal device cannot complete CSI computation and reporting within a specified value. In this embodiment of this application, the time domain position value of the CSI reference resource is related to the quantity of reference signal resources. This can ensure that the terminal device can complete CSI measurement, computation, and reporting, thereby increasing a CSI reporting success rate.

In a possible implementation, that the terminal device determines the time domain position of the CSI reference resource based on the first information includes: The terminal device determines the time domain position of the CSI reference resource based on a reference slot interval $n_{ref}$, where when downlink control information (downlink control information, DCI) that triggers the aperiodic CSI reporting and the aperiodic CSI reporting are not in a same slot, $n_{ref}$ is a minimum positive integer greater than or equal to $\lfloor Z'/N_{symb}^{slot} \rfloor$, $N_{symb}^{slot}$ represents a quantity of symbols included in one slot, and a value of $Z'$ is determined based on $N_{TRP}$.

According to a second aspect, this application provides a method for determining a time domain position interval. The method may be applied to a terminal device, an apparatus (for example, a chip, a chip system, or a circuit) in the terminal device, or an apparatus that can be used in collaboration with the terminal device. An example in which the method is applied to the terminal device is used below for description. The method may include: The terminal device receives first information from a network device, where the first information indicates a quantity $N_{TRP}$ of reference signal resources used for CSI measurement, a CSI reporting type is aperiodic CSI reporting, and $N_{TRP}$ is a positive integer greater than or equal to 1. The terminal device determines, based on the first information, a minimum interval $Z$ between a time domain position of a resource on which the aperiodic CSI reporting is performed and a time domain position of a resource on which DCI that triggers the aperiodic CSI reporting is located.

In the solution provided in this application, the terminal device may determine, based on the quantity $N_{TRP}$, that is indicated by the first information from the network device, of reference signal resources used for CSI measurement, the minimum interval $Z$ between the time domain position of the resource on which the aperiodic CSI reporting is performed and the time domain position of the resource on which the DCI that triggers the aperiodic CSI reporting is located, where the CSI reporting type is the aperiodic reporting. Currently, joint CSI feedback corresponding to a plurality of reference signal resources is not considered for a predefined value of Z, which may cause a problem that the terminal device cannot complete CSI computation and reporting within a specified value. In this embodiment of this application, the value of Z is related to the quantity of reference signal resources. This can ensure that the terminal device can complete CSI measurement, computation, and reporting, thereby increasing a CSI reporting success rate. According to the method according to the first aspect or the second aspect, in a possible implementation, a value of at least one of $Z'$ and Z satisfies one or more of the following:

satisfying a function relationship with a value of $N_{TRP}$;
being positively correlated with the value of $N_{TRP}$; and
having a correspondence with a value group of $N_{TRP}$.

According to the method according to the first aspect or the second aspect, in a possible implementation, the method further includes: The terminal device sends first capability information to the network device, where the first capability information indicates a CSI measurement and computation capability of the terminal device.

According to the method according to the first aspect or the second aspect, in a possible implementation, a value of at least one of $Z'$ and Z satisfies one or more of the following:

satisfying a function relationship with a value of $N_{TRP}$, where a value of one or more of parameters other than $N_{TRP}$ in the function relationship is determined based on the first capability information; and
having a correspondence with a value group of $N_{TRP}$, where the correspondence between the value of at least one of $Z'$ and Z and the value of $N_{TRP}$ is associated with the first capability information.

According to a third aspect, this application provides a method for determining a CSI reference resource. The method may be applied to a network device, an apparatus (for example, a chip, a chip system, or a circuit) in the network device, or an apparatus that can be used in collaboration with the network device. An example in which the method is applied to the network device is used below for description. The method may include: The network device determines first information, where the first information indicates a quantity $N_{TRP}$ of reference signal resources used for CSI measurement, a CSI reporting type is aperiodic CSI reporting, and $N_{TRP}$ is a positive integer greater than or equal to 1. The network device sends the first information to a terminal device, where a time domain position of the CSI reference resource is determined based on the first information.

In the solution provided in this application, the network device may send, to the terminal device, the first information indicating the quantity $N_{TRP}$ of reference signal resources used for CSI measurement, so that the terminal device determines the time domain position of the CSI reference resource based on the first information, where the CSI reporting type is the aperiodic reporting. Currently, joint CSI feedback corresponding to a plurality of reference signal resources is not considered for a predefined time domain position value of the CSI reference resource, which may cause a problem that the terminal device cannot complete CSI computation and reporting within a specified value. In this embodiment of this application, the time domain position value of the CSI reference resource is related to the quantity of reference signal resources. This can ensure that the terminal device can complete CSI measurement, computation, and reporting, thereby increasing a CSI reporting success rate.

It should be understood that an execution body of the third aspect may be the network device, and specific content of the third aspect corresponds to content of the first aspect. For corresponding features of the third aspect and beneficial effects achieved by the third aspect, refer to the descriptions of the first aspect. To avoid repetition, detailed descriptions are properly omitted herein.

In a possible implementation, that the time domain position of the CSI reference resource is determined based on the first information includes:

The time domain position of the CSI reference resource is determined based on a reference slot interval $n_{ref}$, where when DCI that triggers the aperiodic CSI reporting and the aperiodic CSI reporting are not in a same slot, $n_{ref}$ is a minimum positive integer greater than or equal to $\lfloor Z'/N_{symb}^{slot} \rfloor$, $N_{symb}^{slot}$ represents a quantity of symbols included in one slot, and a value of $Z'$ is determined based on $N_{TRP}$.

According to a fourth aspect, this application provides a method for determining a time domain position interval. The method may be applied to a network device, an apparatus (for example, a chip, a chip system, or a circuit) in the network device, or an apparatus that can be used in collaboration with the network device. An example in which the method is applied to the network device is used below for description. The method may include: The network device determines first information, where the first information indicates a quantity $N_{TRP}$ of reference signal resources used for CSI measurement, a CSI reporting type is aperiodic CSI reporting, and $N_{TRP}$ is a positive integer greater than or equal to 1. The network device sends the first information to a terminal device, where a minimum interval Z between a time domain position of a resource on which the aperiodic CSI reporting is performed and a time domain position of a resource on which DCI that triggers the aperiodic CSI reporting is located is determined based on the first information.

In the solution provided in this application, the network device may send, to the terminal device, the first information indicating the quantity $N_{TRP}$ of reference signal resources used for CSI measurement, so that the terminal device determines, based on the first information, the minimum interval Z between the time domain position of the resource on which the aperiodic CSI reporting is performed and the time domain position of the resource on which the DCI that triggers the aperiodic CSI reporting is located, where the CSI reporting type is the aperiodic reporting. Currently, joint CSI feedback corresponding to a plurality of reference signal resources is not considered for a predefined value of Z, which may cause a problem that the terminal device cannot complete CSI computation and reporting within a specified value. In this embodiment of this application, the value of Z is related to the quantity of reference signal resources. This can ensure that the terminal device can complete CSI measurement, computation, and reporting, thereby increasing a CSI reporting success rate.

It should be understood that an execution body of the fourth aspect may be the network device, and specific content of the fourth aspect corresponds to content of the second aspect. For corresponding features of the fourth aspect and beneficial effects achieved by the fourth aspect, refer to the descriptions of the second aspect. To avoid repetition, detailed descriptions are properly omitted herein.

According to the method according to the third aspect or the fourth aspect, in a possible implementation, a value of at least one of $Z'$ and Z satisfies one or more of the following:

satisfying a function relationship with a value of $N_{TRP}$;
being positively correlated with the value of $N_{TRP}$; and
having a correspondence with a value group of $N_{TRP}$.

According to the method according to the third aspect or the fourth aspect, in a possible implementation, the method further includes: The network device receives first capability information from the terminal device, where the first capability information indicates a CSI measurement and computation capability of the terminal device.

According to the method according to the third aspect or the fourth aspect, in a possible implementation, a value of at least one of $Z'$ and Z satisfies one or more of the following:

satisfying a function relationship with a value of $N_{TRP}$, where a value of one or more of parameters other than $N_{TRP}$ in the function relationship is determined based on the first capability information; and
having a correspondence with a value group of $N_{TRP}$, where the correspondence between the value of at least one of $Z'$ and Z and the value of $N_{TRP}$ is associated with the first capability information.

According to a fifth aspect, this application provides a method for determining a CSI reference resource. The method may be applied to a terminal device, an apparatus (for example, a chip, a chip system, or a circuit) in the terminal device, or an apparatus that can be used in collaboration with the terminal device. An example in which the method is applied to the terminal device is used below for description. The method may include: The terminal device receives first information from a network device, where the first information indicates a quantity $N_{TRP}$ of reference signal resources used for CSI measurement, a CSI reporting type is periodic CSI reporting or semi-persistent CSI reporting, and $N_{TRP}$ is a positive integer greater than or equal to 1. The terminal device determines a time domain position of the CSI reference resource based on the first information and first capability information that is reported by the terminal device.

In the solution provided in this application, the terminal device may determine the time domain position of the CSI reference resource based on the first capability information reported by the terminal device and the quantity $N_{TRP}$, that is indicated by the first information from the network device, of reference signal resources used for CSI measurement, where the CSI reporting type is the periodic reporting or the semi-persistent reporting. Currently, a time domain position value of the CSI reference resource is related only to the quantity of reference signal resources, which may cause a problem that the terminal device cannot complete CSI computation and reporting within a specified value. In this embodiment of this application, the time domain position value of the CSI reference resource is related not only to the quantity of reference signal resources, but also to the first capability information reported by the terminal device. This can ensure that the terminal device can complete CSI measurement, computation, and reporting, thereby increasing a CSI reporting success rate.

In a possible implementation, that the terminal device determines the time domain position of the CSI reference resource based on the first information and the first capability information that is reported by the terminal device includes: The terminal device determines the time domain position of the CSI reference resource based on a first parameter, where the first parameter is determined based on a value of $N_{TRP}$ and the first capability information that is reported by the terminal device.

In a possible implementation, the first parameter satisfies one or more of the following:

satisfying a function relationship with the value of $N_{TRP}$, where a value of one or more of parameters other than $N_{TRP}$ in the function relationship is determined based on the first capability information; and
having a correspondence with a value group of $N_{TRP}$, where the correspondence between a value of the first parameter and the value of $N_{TRP}$ is associated with the first capability information.

In a possible implementation, the method further includes: The terminal device sends the first capability information to the network device, where the first capability information indicates a CSI measurement and computation capability of the terminal device.

According to a sixth aspect, this application provides a method for determining a CSI reference resource. The method may be applied to a network device, an apparatus (for example, a chip, a chip system, or a circuit) in the network device, or an apparatus that can be used in collaboration with the network device. An example in which the method is applied to the network device is used below for description. The method may include: The network device sends first information to a terminal device, where the first information indicates a quantity $N_{TRP}$ of reference signal resources used for CSI measurement, a CSI reporting type is periodic CSI reporting or semi-persistent CSI reporting, and $N_{TRP}$ is a positive integer greater than or equal to 1.

The network device receives first capability information from the terminal device, where a time domain position of the CSI reference resource is determined based on the first information and the first capability information that is reported by the terminal device.

In the solution provided in this application, the network device may send, to the terminal device, the first information indicating the quantity $N_{TRP}$ of reference signal resources used for CSI measurement, so that the terminal device determines the time domain position of the CSI reference resource based on the first information and the first capability information that is reported by the terminal device, where the CSI reporting type is the periodic reporting or the semi-persistent reporting. Currently, a time domain position value of the CSI reference resource is related only to the quantity of reference signal resources, which may cause a problem that the terminal device cannot complete CSI computation and reporting within a specified value. In this embodiment of this application, the time domain position value of the CSI reference resource is related not only to the quantity of reference signal resources, but also to the first capability information reported by the terminal device. This can ensure that the terminal device can complete CSI measurement, computation, and reporting, thereby increasing a CSI reporting success rate.

It should be understood that an execution body of the sixth aspect may be the network device, and specific content of the sixth aspect corresponds to content of the fifth aspect. For corresponding features of the sixth aspect and beneficial effects achieved by the sixth aspect, refer to the descriptions of the fifth aspect. To avoid repetition, detailed descriptions are properly omitted herein.

In a possible implementation, that the time domain position of the CSI reference resource is determined based on the first information and the first capability information that is reported by the terminal device includes: The time domain position of the CSI reference resource is determined based on a first parameter, where the first parameter is determined based on a value of $N_{TRP}$ and the first capability information that is reported by the terminal device.

In a possible implementation, the first parameter satisfies one or more of the following:

satisfying a function relationship with the value of $N_{TRP}$, where a value of one or more of parameters other than $N_{TRP}$ in the function relationship is determined based on the first capability information reported by the terminal device; and
having a correspondence with a value group of $N_{TRP}$, where the correspondence between a value of the first parameter and the value of $N_{TRP}$ is associated with the first capability information.

In a possible implementation, the method further includes: The network device receives the first capability information from the terminal device, where the first capability information indicates a CSI measurement and computation capability of the terminal device.

According to a seventh aspect, an embodiment of this application provides a communication apparatus. The communication apparatus may be used in a terminal device, a module (for example, a chip or a processor) in the terminal device, or a logical module or software that can implement all or some functions of the terminal device. The communication apparatus has functions of implementing behavior in the method instance according to the first aspect or any implementation of the first aspect, functions of implementing behavior in the method instance according to the second aspect or any implementation of the second aspect, or functions of implementing behavior in the method instance according to the fifth aspect or any implementation of the fifth aspect. The functions may be implemented by hardware, or may be implemented by hardware executing corresponding software. The hardware or the software includes one or more modules corresponding to the foregoing functions. For beneficial effects, refer to the descriptions of the first aspect, the second aspect, or the fifth aspect. Details are not described herein again.

According to an eighth aspect, an embodiment of this application provides a communication apparatus. The communication apparatus may be used in a network device, a module (for example, a chip or a processor) in the network device, or a logical module or software that can implement all or some functions of the network device. The communication apparatus has functions of implementing behavior in the method instance according to the third aspect or any implementation of the third aspect, functions of implementing behavior in the method instance according to the fourth aspect or any implementation of the fourth aspect, or functions of implementing behavior in the method instance according to the sixth aspect or any implementation of the sixth aspect. The functions may be implemented by hardware, or may be implemented by hardware executing corresponding software. The hardware or the software includes one or more modules corresponding to the foregoing functions. For beneficial effects, refer to the descriptions of the third aspect, the fourth aspect, or the sixth aspect. Details are not described herein again.

According to a ninth aspect, a communication apparatus is provided. The communication apparatus may be the terminal device in the foregoing method embodiments, or may be an apparatus (for example, a chip, a chip system, or a circuit) in the terminal device. The communication apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the method according to the first aspect or any implementation of the first aspect, the second aspect or any implementation of the second aspect, or the fifth aspect or any implementation of the fifth aspect.

According to a tenth aspect, a communication apparatus is provided. The communication apparatus may be the network device in the foregoing method embodiments, or may be an apparatus (for example, a chip, a chip system, or a circuit) in the network device. The communication apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the method according to the third aspect or any implementation of the third aspect, the fourth aspect or any implementation of the fourth aspect, or the sixth aspect or any implementation of the sixth aspect.

According to an eleventh aspect, this application provides a computer-readable storage medium. The computer-readable storage medium stores a computer program or computer instructions. When the computer program or the computer instructions are run, the method according to the first aspect and any possible implementation of the first aspect, the second aspect and any possible implementation of the second aspect, the third aspect and any possible implementation of the third aspect, the fourth aspect and any possible implementation of the fourth aspect, the fifth aspect and any possible implementation of the fifth aspect, or the sixth aspect and any possible implementation of the sixth aspect is performed.

According to a twelfth aspect, this application provides a computer program product including program instructions. When the program instructions are run a computer, the computer is enabled to perform the method according to the first aspect and any possible implementation of the first aspect, the second aspect and any possible implementation of the second aspect, the third aspect and any possible implementation of the third aspect, the fourth aspect and any possible implementation of the fourth aspect, the fifth aspect and any possible implementation of the fifth aspect, or the sixth aspect and any possible implementation of the sixth aspect.

According to a thirteenth aspect, this application provides a communication apparatus. The communication apparatus includes a processor, and may further include a memory, to implement the method according to the first aspect and any possible implementation of the first aspect, the second aspect and any possible implementation of the second aspect, the third aspect and any possible implementation of the third aspect, the fourth aspect and any possible implementation of the fourth aspect, the fifth aspect and any possible implementation of the fifth aspect, or the sixth aspect and any possible implementation of the sixth aspect. The communication apparatus may be a chip system. The chip system may include a chip, or may include a chip and another discrete device.

According to a fourteenth aspect, this application provides a communication system. The communication system includes at least one terminal device and at least one network device. When the at least one terminal device and the at least one network device run in the communication system, the method according to any one of the first aspect to the sixth aspect is performed.

## BRIEF DESCRIPTION OF DRAWINGS

To describe embodiments of this application more clearly, the following briefly describes the accompanying drawings to be used in embodiments. It is clear that persons of ordinary skill in the art can further obtain other drawings based on these accompanying drawings without creative efforts.

FIG. 1 is an interaction flowchart of CSI measurement according to an embodiment of this application;
FIG. 2a is a diagram of a network architecture according to an embodiment of this application;
FIG. 2b is a diagram of another network architecture according to an embodiment of this application;
FIG. 3 is a diagram of a network element structure according to an embodiment of this application;
FIG. 4 is an interaction diagram of a method for determining a CSI reference resource according to an embodiment of this application;
FIG. 5 is an interaction diagram of a method for determining a time domain position interval according to an embodiment of this application;
FIG. 6 is an interaction diagram of another method for determining a CSI reference resource according to an embodiment of this application;
FIG. 7 is a diagram of a structure of an apparatus for determining a CSI reference resource according to an embodiment of this application;
FIG. 8 is a diagram of a structure of another apparatus for determining a CSI reference resource according to an embodiment of this application;
FIG. 9 is a diagram of a structure of an apparatus for determining a time domain position interval according to an embodiment of this application;
FIG. 10 is a diagram of a structure of another apparatus for determining a time domain position interval according to an embodiment of this application;
FIG. 11 is a diagram of a structure of another communication apparatus according to an embodiment of this application; and
FIG. 12 is a diagram of a structure of a terminal device according to an embodiment of this application.

## DESCRIPTION OF EMBODIMENTS

In descriptions of this application, "/" indicates "or", unless otherwise specified. For example, A/B may indicate A or B. In this application, "and/or" describes only an association relationship between associated objects and indicates that three relationships may exist. For example, A and/or B may indicate the following three cases: Only A exists, both A and B exist, and only B exists. In addition, "at least one" may mean one or more, "a plurality of" may mean two or more, and "at least one of ..." indicates the listed items and any combination thereof. For example, "at least one of A, B, and C" or "at least one of A, B, or C" may indicate the following six cases: Only A exists, only B exists, only C exists, both A and B exist, both B and C exist, both A and C exist, and A, B, and C all exist. Terms such as "first" and "second" do not limit a quantity and an execution sequence, and the terms such as "first" and "second" do not indicate a definite difference.

It should be noted that, in this application, a word such as "example" or "for example" indicates an example, an instance, or a description. Any embodiment or design scheme described as an "example" or "for example" in this application should not be understood as being more preferred or having more advantages than another embodiment or design scheme. Exactly, use of the word such as "example" or "for example" is intended to present a related concept in a specific manner.

In the descriptions of this application, "indication" may include a direct indication and an indirect indication, or may include an explicit indication and an implicit indication. Information indicated by a piece of information (for example, indication information described below) is referred to as to-be-indicated information. In a specific implementation process, there are a plurality of manners of indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and another part of the to-be-indicated information is known or pre-agreed on. In addition, specific information may alternatively be indicated by using a pre-agreed (for example, stipulated in a protocol) arrangement sequence of various pieces of information, to reduce indication overheads to some extent.

The following first describes technical terms that may appear in embodiments of this application. Terms used in implementations of this application are merely used to explain specific embodiments of this application, but are not intended to limit this application. In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

(1) Channel state information CSI

In a process in which a signal passes through a channel from a transmitting end to a receiving end, scattering, fading, and energy attenuation with distance may occur. The channel state information represents a channel feature. The CSI may include at least one of a channel quality indicator (channel quality indicator, CQI), a precoding matrix indicator (precoding matrix indicator, PMI), a CSI-RS resource indicator (CSI-RS resource indicator, CRI), a synchronization signal/physical broadcast channel block (synchronization signal/physical broadcast channel block, SSB) resource indicator (SSB resource indicator, SSBRI), a layer indicator (layer indicator, LI), a rank indicator (rank indicator, RI), an L1-RSRP, and an L1-SINR. These pieces of CSI information may be sent by a terminal device to a network device through a physical uplink control channel (physical uplink control channel, PUCCH) or a physical uplink shared channel (physical uplink shared channel, PUSCH).

(2) CSI measurement

In a 5th generation (5th generation, 5G) communication system, for spectrum efficiency of the system, a massive multiple-antenna (massive multiple-input multiple-output, massive MIMO) technology may be used. When the MIMO technology is used, the network device needs to send data to the terminal device based on CSI fed back by the terminal device to the network device. Therefore, CSI measurement is important.

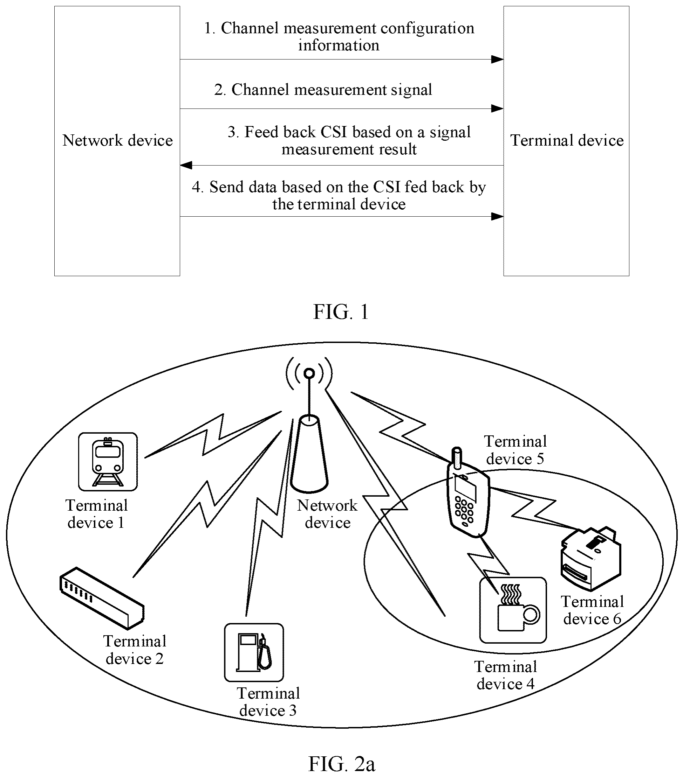

FIG. 1 is an interaction flowchart of CSI measurement according to an embodiment of this application. As shown in FIG. 1, CSI measurement may include the following steps: 1. A network device sends channel measurement configuration information to a terminal device, to notify the terminal device of channel measurement time and behavior. 2. The network device sends a channel measurement signal (pilot) to the terminal device. For example, in a new radio (New radio, NR) system, the network device may send a non-zero power channel state information reference signal (non-zero power channel state information reference signal, NZP CSI-RS) to the terminal device for downlink channel measurement, and the terminal device receives the NZP CSI-RS on a preconfigured channel measurement resource (channel measurement resource, CMR) to perform channel measurement. In addition, the network device may further configure, for the terminal device, a group of interference measurement resources (interference measurement resource, IMR) corresponding to the CMR, and the terminal device receives a signal on these preconfigured IMRs to perform interference measurement. 3. The terminal device feeds back CSI based on a signal measurement result. The terminal device obtains the CSI through computation based on results of measurement on the CMR and IMR, and reports the CSI to the network device. The CSI may include an RI, a CQI, a PMI, and the like. 4. The network device sends data based on the CSI fed back by the terminal device. For example, the network device may determine, based on the RI in the CSI fed back by the terminal device, a quantity of streams for transmitting data to the terminal device, determine, based on the CQI in the CSI fed back by the terminal device, a modulation order and a channel code rate for transmitting data to the terminal device, and determine, based on the PMI in the CSI fed back by the terminal device, precoding for transmitting data to the terminal device.

(3) NZP CSI-RS/CSI-IM resource type

An NZP CSI-RS resource used for channel measurement, an NZP CSI-RS resource used for interference measurement, and a channel state information interference measurement (channel state information interference measurement, CSI-IM) resource used for interference measurement may be periodic, semi-persistent, or aperiodic. The periodic/semi-persistent/aperiodic NZP CSI-RS resource and CSI-IM resource may be configured for the terminal device by using higher layer signaling (for example, radio resource control (radio resource control, RRC) signaling).

For the periodic NZP CSI-RS/CSI-IM resource, the terminal device receives an NZP CSI-RS signal on the periodic NZP CSI-RS resource with a fixed interval, and measures interference on the periodic CSI-IM resource with a fixed interval.

For the semi-persistent NZP CSI-RS/CSI-IM resource, the network device may activate and deactivate the NZP CSI-RS/CSI-IM resource. In an activation period, the terminal device receives an NZP CSI-RS signal on the periodic NZP CSI-RS resource with a fixed interval, and measures interference on the periodic CSI-IM resource with a fixed interval. For the aperiodic NZP CSI-RS/CSI-IM resource, the network device may configure an NZP CSI-RS resource set (NZP-CSI-RS-ResourceSet) for the terminal device by using higher layer signaling (for example, RRC signaling).

Each NZP CSI-RS resource set includes a plurality of NZP CSI-RS resources, and one slot offset (slot offset) is configured for each NZP CSI-RS resource set, to determine a slot in which an NZP CSI-RS resource in the set is located. The network device may associate an aperiodic NZP CSI-RS/CSI-IM resource set with one aperiodic CSI report by using higher layer signaling (for example, RRC, or RRC + medium access control control element (medium access control control element, MAC CE)). A network side triggers aperiodic CSI reporting by using DCI. When the aperiodic CSI reporting is triggered, an aperiodic NZP CSI-RS/CSI-IM resource set associated with the aperiodic CSI reporting is also triggered. A slot corresponding to the NZP CSI-RS/CSI-IM resource set is a slot in which the DCI performs triggering plus a slot offset. For example, when the slot offset is 0, the NZP CSI-RS/CSI-IM resource set and the DCI are in a same slot. For example, when the slot offset is 2, the NZP CSI-RS/CSI-IM resource set is located on resources two slots after the slot in which the DCI performs triggering. Aperiodic NZP CSI-RS resources in a same set have a same slot offset, and specific symbols on which these aperiodic NZP CSI-RS resources are located in a same slot are configured in configuration information of each NZP CSI-RS resource, that is, aperiodic NZP CSI-RS resources in a same set are located on a same symbol/different symbols in a same slot.

(4) CSI reporting type

There may be three CSI reporting types: periodic CSI reporting (periodic CSI reporting, P-CSI), semi-persistent CSI reporting (semi-persistent CSI reporting, SP-CSI), and aperiodic CSI reporting (aperiodic CSI reporting, AP-CSI).

Periodic CSI reporting: The network device configures, by using higher layer signaling (for example, RRC signaling), the terminal device to perform periodic CSI reporting. After performing channel measurement and interference measurement, the terminal device calculates CSI, and reports the CSI at a fixed time interval. In the foregoing periodic CSI reporting, both a CMR used for measurement and an IMR used for interference measurement are periodic.

Semi-persistent CSI reporting: When the terminal device is configured to perform semi-persistent CSI reporting, the terminal device starts the CSI reporting after receiving downlink activation signaling transmitted by the network device, and ends the CSI reporting after receiving downlink deactivation signaling. The terminal device performs periodic CSI measurement and reporting between the two downlink signaling delivery moments. A CMR and an IMR used for the semi-persistent CSI reporting may be periodic or semi-persistent. Semi-persistent CSI may be reported on a PUCCH resource, and the network device activates and deactivates the semi-persistent CSI reporting by using downlink higher layer signaling (for example, MAC CE signaling). Alternatively, semi-persistent CSI may be reported on a PUSCH resource, and the network device activates and deactivates the semi-persistent CSI reporting by using physical downlink control signaling (downlink control information, DCI).

Aperiodic CSI reporting: An aperiodic CSI reporting and measurement process is as follows: The network device semi-statically configures configuration parameters of a plurality of CSI reports for the terminal device by using downlink RRC signaling, and triggers one or more CSI reports by using DCI. The terminal device performs CSI measurement based on the configuration parameters of the CSI reports, and reports a CSI measurement result by using a PUSCH. It may be understood that, although both the aperiodic CSI measurement and reporting and the semi-persistent CSI measurement and reporting need to be triggered or activated by the network device, the aperiodic CSI measurement and reporting do not need to be deactivated after being triggered by the DCI, and measurement and reporting are performed only once. A CMR and an IMR used for the aperiodic CSI reporting may be periodically, semi-persistently, or aperiodically sent.

(5) Multi-station collaboration

To improve throughput performance of a system, a plurality of TRPs may serve a terminal device in a multi-station collaboration manner. The multi-station collaboration manner may include CJT, NCJT, and the like. In the CJT collaboration manner, a plurality of TRPs simultaneously serve a terminal device, and transmission is transparent to the terminal device. From a perspective of the terminal device, a plurality of TRPs in a collaboration set may be equivalent to one large base station. Therefore, the terminal device needs to jointly feed back channel state information of all TRPs in the collaboration set, to enable coherent joint transmission. Currently, CSI measurement is enhanced in the industry, and CSI measurement feedback based on CJT can be implemented. For example, one CMR can include K ($K \geq 1$) NZP CSI-RS resources in one NZP CSI-RS resource set for CSI measurement, and one CSI-RS resource is associated with one TRP. All NZP CSI-RS resources have a same quantity of CSI-RS ports, and a quantity of ports of a single resource does not exceed 32. Specifically, the network device configures the K NZP CSI-RS resources for the terminal device for channel measurement, and the terminal device calculates and reports CSI based on a CJT codebook on a channel measured on the K NZP CSI-RS resources.

(6) CSI reference resource (CSI reference resource)

Because specific time is required between CSI measurement and CSI reporting by the terminal device to ensure that the terminal device has sufficient time to perform CSI computation, the CSI reference resource is defined in NR to ensure a CSI computation delay. The CSI reference resource has a corresponding time-frequency domain resource, and a time domain position of the CSI reference resource is a slot not later than a slot (slot) in which CSI reporting is performed. CSI reporting is based on CSI obtained through measurement on a CMR and an IMR before a slot in which a CSI reference resource associated with the CSI reporting is located, that is, the CSI is obtained through measurement on the CMR and the IMR in another slot before the slot in which the CSI reference resource is located. Alternatively, the CMR and the IMR may be in a same slot as the CSI reference resource.

It should be understood that descriptions of the foregoing technical terms are merely examples. For example, with continuous development of technologies, ranges of the foregoing definitions may also change. This is not limited in embodiments of this application.

A network architecture to which an embodiment of this application is applicable is first described below by using an example.

It should be understood that the technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution advanced (LTE advanced, LTE-A) system, a 5G system, an NR system, an open access network (open RAN, O-RAN) system, a machine to machine (machine to machine, M2M) system, or another future evolved communication system. This is not limited in embodiments of this application. The technical solutions provided in embodiments of this application may be further applied to another communication system, provided that an entity in the communication system can send control information and send (and/or receive) a transport block, and another entity in the communication system can receive the control information and receive (and/or send) the transport block.

FIG. 2a is a diagram of a network architecture according to an embodiment of this application. As shown in FIG. 2a, the network architecture includes a network device and a terminal device 1 to a terminal device 6. The network device sends control information and/or a transport block to one or more of the terminal device 1 to the terminal device 6. In addition, the terminal device 4 to the terminal device 6 may also form a communication system. In the communication system, the terminal device 5 may send control information and/or a transport block to one or both of the terminal device 4 and the terminal device 6.

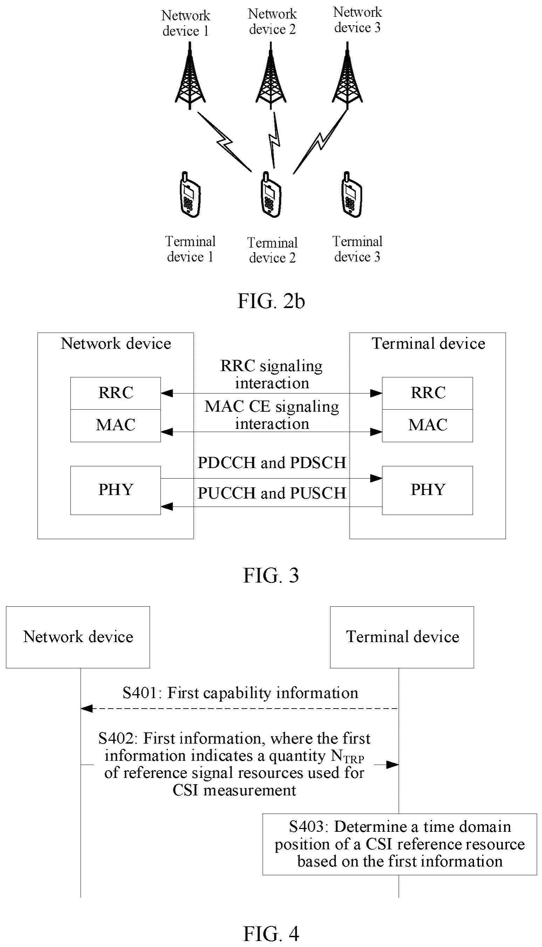

FIG. 2b is a diagram of another network architecture according to an embodiment of this application. As shown in FIG. 2b, a plurality of network devices (for example, a network device 1, a network device 2, and a network device 3) and a plurality of terminal devices (for example, a terminal device 1, a terminal device 2, and a terminal device 3) form a communication system, and the plurality of network devices (for example, the network device 1, the network device 2, and the network device 3) may simultaneously serve one terminal device (for example, the terminal device 2). The terminal device may be connected to the network device in a wireless manner, and the terminal devices may be connected to each other and the network devices may be connected to each other in a wired or wireless manner.

In embodiments of this application, the terminal device is a user-side entity configured to receive or transmit a signal, such as a user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, for example, various smart bands or smart jewelry for monitoring physical signs.

In addition, in embodiments of this application, the terminal device may alternatively be a terminal device in an internet of things (internet of things, IoT) system. The IoT is an important part of future development of information technologies, and a main technical feature of the IoT is to connect things to a network by using a communication technology, to implement an intelligent network for an interconnection between a person and a machine or between things. In embodiments of this application, the IoT technology can implement massive connections, deep coverage, and terminal power saving by using, for example, a narrow band (narrow band, NB) technology.

In addition, in embodiments of this application, the terminal device may alternatively include a sensor such as an intelligent printer, a train detector, or a gas station, and main functions include collecting data (for some terminal devices), receiving control information and downlink data of a network device, sending an electromagnetic wave, and transmitting uplink data to the network device.

In embodiments of this application, the network device is an entity configured to transmit or receive a signal, and may be a device configured to communicate with the terminal device in a wireless network. For example, the network device may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. This is not limited in embodiments of this application. For another example, the network device may be a radio access network (radio access network, RAN) node that connects the terminal device to the wireless network. Currently, some example RAN nodes are a base station, a next-generation gNodeB gNB, a transmission reception point (transmission reception point, TRP), an evolved NodeB (evolved NodeB, eNB), a home base station, a baseband unit (baseband unit, BBU), and an access point (access point, AP) in a Wi-Fi system. In a network structure, the network device may include a central unit (central unit, CU) node or a distributed unit (distributed unit, DU) node, or a RAN device including a CU node and a DU node. In an O-RAN system, the CU may also be referred to as an O-CU, and the DU may also be referred to as an O-DU.

Further, FIG. 3 is a diagram of a network element structure according to an embodiment of this application. As shown in FIG. 3, a terminal device may include a radio resource control (radio resource control, RRC) signaling interaction module, a medium access control (medium access control, MAC) signaling interaction module, a physical (physical, PHY) signaling and data interaction module, and the like, and a network device may include an RRC signaling interaction module, a MAC signaling interaction module, a PHY signaling and data interaction module, and the like. The RRC signaling interaction module may be configured to send and receive RCC signaling between the network device and the terminal device. The MAC signaling interaction module may be configured to send and receive MAC CE signaling between the network device and the terminal device. The PHY signaling and data interaction module may be configured to send and receive uplink/downlink control signaling between the network device and the terminal device, for example, a physical downlink control channel (physical downlink control channel, PDCCH), a physical downlink shared channel (physical downlink shared channel, PDSCH), a PUCCH, and a PUSCH, and uplink/downlink data

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. A term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to radio channels, and various other media that can store, contain and/or carry instructions and/or data.

It should be noted that quantities and types of terminal devices included in the network architectures shown in FIG. 2a and FIG. 2b are merely examples. Embodiments of this application are not limited thereto. For example, more or fewer terminal devices that communicate with the network device may be further included. For brevity, details are not described in the accompanying drawings. In addition, in the network architectures shown in FIG. 2a and FIG. 2b, although the network device and the terminal device are shown, the application scenario may not be limited to including the network device and the terminal device. For example, the application scenario may further include a core network node or a device configured to bear a virtualized network function. This is clear to persons skilled in the art, and details are not described herein.

In a CJT scenario, a problem that CSI measurement and computation cannot be completed in time by a terminal device due to relatively high CSI measurement and computation complexity is easily caused:

An embodiment of this application provides a method for determining a CSI reference resource. When a CSI reporting type is aperiodic reporting, a terminal device determines a time domain position of the CSI reference resource based on first information that is from a network device and that indicates a quantity $N_{TRP}$ of reference signal resources used for CSI measurement. When the CSI reporting type is periodic reporting or semi-persistent reporting, the terminal device determines the time domain position of the CSI reference resource based on first capability information reported by the terminal device and the first information that is from the network device and that indicates the quantity $N_{TRP}$ of reference signal resources used for CSI measurement. Currently, joint CSI feedback corresponding to a plurality of reference signal resources is not considered for a predefined time domain position value of the CSI reference resource, which may cause a problem that the terminal device cannot complete CSI computation and reporting within a specified value. A method for determining a time domain position of a CSI reference resource in this embodiment of this application can ensure that the terminal device can complete CSI measurement, computation, and reporting, thereby increasing a CSI reporting success rate.

An embodiment of this application further provides a method for determining a time domain position interval. A terminal device may determine, based on a quantity $N_{TRP}$, that is indicated by first information from a network device, of reference signal resources used for CSI measurement, a minimum interval Z between a time domain position of a resource on which aperiodic CSI reporting is performed and a time domain position of a resource on which DCI that triggers the aperiodic CSI reporting is located, where a CSI reporting type is the aperiodic reporting. Currently, joint CSI feedback corresponding to a plurality of reference signal resources is not considered for a predefined value of Z, which may cause a problem that the terminal device cannot complete CSI computation and reporting within a specified value. In this embodiment of this application, the value of Z is related to the quantity of reference signal resources. This can ensure that the terminal device can complete CSI measurement, computation, and reporting, thereby increasing a CSI reporting success rate.

The following separately provides descriptions by using the following embodiments. It should be understood that these methods may be used in combination with each other.

It should be understood that determining of a time domain position of a CSI reference resource and determining of a time domain position interval may change with evolution of the technical solutions. The technical solutions provided in this application are not limited to the following described processes. Further, descriptions of the scenarios in embodiments of this application are merely examples, and the solutions in embodiments of this application are not limited to being applicable to only the described scenarios, and are also applicable to a scenario in which a similar problem exists.

The terminal device in embodiments (for example, the following embodiments corresponding to FIG. 4 to FIG. 6) of this application may be the terminal device in the network architectures shown in FIG. 2a and FIG. 2b. Functions performed by the terminal device in embodiments may alternatively be performed by an apparatus (for example, a chip, a chip system, or a circuit) in the terminal device. The network device in embodiments may be the network device in the network architectures shown in FIG. 2a and FIG. 2b. Functions performed by the network device in embodiments may alternatively be performed by an apparatus (for example, a chip, a chip system, or a circuit) in the network device. In embodiments of this application, uniform descriptions are provided herein, and details are not described below again.

The following describes a method for determining a CSI reference resource according to an embodiment of this application. FIG. 4 is an interaction diagram of a method for determining a CSI reference resource according to an embodiment of this application. The method for determining a CSI reference resource is applicable to a scenario in which a CSI reporting type is aperiodic CSI reporting. As shown in FIG. 4, the method for determining a CSI reference resource may include the following steps. Step S401 is an optional step.

S401: A terminal device reports first capability information to a network device. Correspondingly, the network device receives the first capability information from the terminal device.

The first capability information indicates a CSI measurement and computation capability of the terminal device. For example, the first capability information includes a CSI measurement and computation capability parameter of the terminal device.

S402: The network device sends first information to the terminal device, where the first information indicates a quantity $N_{TRP}$ of reference signal resources used for CSI measurement. Correspondingly, the terminal device receives the first information from the network device.

The network device may send the first information to the terminal device, where the first information indicates the quantity $N_{TRP}$ of reference signal resources used for CSI measurement. The first information may directly indicate the quantity $N_{TRP}$ of reference signal resources used for CSI measurement. For example, $N_{TRP}$ = 4. Alternatively, the first information may indirectly indicate the quantity $N_{TRP}$ of reference signal resources used for CSI measurement. For example, the network device configures specific reference signal resources for the terminal device, and the terminal device may determine the quantity of reference signal resources based on the specific reference signal resources.

In a possible implementation, the network device may directly send the first information to the terminal device, or may send the first information to the terminal device by including the first information in other information. For example, the network device may send indication information to the terminal device, where the indication information indicates to perform CSI measurement based on a CJT codebook, and the indication information may include the first information. Optionally, the indication information may be higher layer signaling CSI-ReportingConfig, CSI-ReportingConfig includes a higher layer parameter codebookConfig, and the higher layer parameter codebookConfig includes a higher layer parameter codebookType, which is used to determine that CSI-ReportingConfig performs CSI measurement based on the CJT codebook. CSI-ReportingConfig further includes resourcesForChannelMeasurement, and may further include csi-IM-ResourceForInterference, where resourcesForChannelMeasurement and csi-IM-ResourceForInterference are respectively associated with an NZP CSI-RS resource set used for channel measurement and a CSI-IM resource set used for interference measurement. The NZP CSI-RS resource set includes $N_{TRP}$ NZP CSI-RS resources, where $N_{TRP}$ is a positive integer greater than or equal to 1, and indicates a quantity of NZP CSI-RS resources included in the NZP CSI-RS resource set.

S403: The terminal device determines a time domain position of the CSI reference resource based on the first information.

After receiving the first information from the network device, the terminal device may determine the time domain position of the CSI reference resource based on the first information. The terminal device may determine a CSI measurement resource based on the time domain position of the CSI reference resource, perform channel measurement and interference measurement on the CSI measurement resource based on a reference signal, and perform CSI computation. An NZP CSI-RS resource used for channel measurement is not later than the CSI reference resource, and a CSI-IM resource used for interference measurement is not later than the CSI reference resource. It should be understood that being not later than includes two cases, to be specific, a slot in which a reference signal resource used for channel/interference measurement is located is earlier than a slot in which the CSI reference resource is located, or a slot in which a reference signal resource used for channel/interference measurement is located is the same as a slot in which the CSI reference resource is located.

A specific time interval is required between CSI measurement and CSI reporting by the terminal device, to ensure that the terminal device has sufficient time to perform CSI computation and prepare CSI reporting. Therefore, the CSI reference resource may be used to determine a valid CSI measurement resource, thereby ensuring a CSI computation delay.

The CSI reference resource may be used to determine a time domain resource position for CSI measurement. Generally, the time domain resource position for CSI measurement is before a time domain resource of the CSI reference resource. For example, the time domain position of the CSI reference resource is in a slot not later than a slot in which CSI reporting is performed. The terminal device determines the time domain resource of the CSI reference resource, and then may determine, based on the time domain resource of the CSI reference resource, the time domain resource position for CSI measurement. CSI reporting is based on CSI obtained through measurement on a CMR and an IMR before a CSI reference resource associated with the CSI reporting.

When the higher layer parameter codebookType indicates to perform CSI measurement based on the CJT codebook, a codebookType field in an existing protocol needs to be newly designed. For example, the codebookType field may be set to typeII-cjt or typeII-PortSelection-cjt.

When the CSI reporting type is the aperiodic reporting, the time domain position of the CSI reference resource is associated with the quantity $N_{TRP}$ of reference signal resources used for CSI measurement. In a possible implementation, the network device may configure $N_{TRP}$ reference signal resources, and the terminal device may select N reference signal resources from the $N_{TRP}$ reference signal resources to perform CSI measurement and computation, where $N \leq N_{TRP}$. N is determined by the terminal device, and may be included in CSI and fed back to the network device. Therefore, the network device does not determine a value of N when configuring a reference signal resource. That the time domain position of the CSI reference resource is associated with the quantity $N_{TRP}$ of reference signal resources used for CSI measurement in this embodiment of this application may be understood as that the time domain position of the CSI reference resource is associated with the quantity $N_{TRP}$ of reference signal resources used for CSI measurement. In another possible implementation, the network device may configure $N_{TRP}$ reference signal resources, and may further configure a value of $N$, to indicate that the terminal device selects $N$ reference signal resources from the $N_{TRP}$ reference signal resources to perform CSI measurement and computation, where $N \leq N_{TRP}$. In this case, that the time domain position of the CSI reference resource is associated with the quantity of reference signal resources used for CSI measurement in this embodiment of this application may be understood as that the time domain position of the CSI reference resource is associated with the quantity $N$ of reference signal resources (that is, a quantity of reference signal resources that are configured by the network device and that are allowed to be selected by the terminal device) used for CSI measurement.

In the conventional technology, the time domain position of the CSI reference resource may be determined based on a time domain position of an uplink resource used by the terminal device for CSI resporting, uplink and downlink subcarrier spacing configuration parameters, and a reference slot interval $n_{ref}$.

In this embodiment of this application, assuming that the time domain position of the uplink resource used for the CSI reporting corresponding to the CSI reference resource is an uplink slot $n'$, the time domain position of the CSI reference resource corresponding to the CSI reporting may be a downlink slot n - $n_{ref}$, where a value of $n_{ref}$ is associated with the quantity $N_{TRP}$ of NZP CSI-RS resources configured in the NZP CSI-RS resource set used for channel measurement. n and $n'$ may satisfy the following formula:

$$n = \left\lfloor n' \cdot \frac{2^{\mu_{DL}}}{2^{\mu_{UL}}} \right\rfloor$$

$\lfloor \ \rfloor$ represents rounding down; $\mu_{DL}$ and $\mu_{UL}$ are separately determined by a parameter set (numerology) configured on a network device side, and respectively represent the uplink and downlink subcarrier spacing configuration parameters; a value of $\mu_{DL}$ is related to a subcarrier spacing corresponding to downlink transmission; and a value of $\mu_{UL}$ is related to a subcarrier spacing corresponding to uplink transmission. For example, for details, refer to Table 1. The subcarrier spacing for downlink transmission may be the same as or different from the subcarrier spacing for uplink transmission.

Table 1 Correspondence between $\mu_{DL}$ or $\mu_{UL}$ and a subcarrier spacing value

| $\mu_{DL}$ or $\mu_{UL}$ | Subcarrier spacing |
|---|---|
| 0 | 15 kHz |
| 1 | 30 kHz |
| 2 | 60 kHz |
| 3 | 120 kHz |

As shown in Table 1, for example, if the subcarrier spacing for uplink transmission is 15 kHz, and the subcarrier spacing for downlink transmission is 15 kHz, it may be obtained according to Table 1 that $\mu_{DL} = 0$, and $\mu_{UL} = 0$; and if the subcarrier spacing for uplink transmission is 15 kHz, and the subcarrier spacing for downlink transmission is 30 kHz, it may be obtained according to Table 1 that $\mu_{DL} = 0$, and $\mu_{UL} = 1$. For example, if the downlink subcarrier spacing is 15 kHz, $\mu_{DL}=0$; if the downlink subcarrier spacing is 30 kHz, $\mu_{DL}=1$; if the downlink subcarrier spacing is 60 kHz, $\mu_{DL}=2$; and if the downlink subcarrier spacing is 120 kHz, $\mu_{DL}=3$. Similarly, if the uplink subcarrier spacing is 15 kHz, $\mu_{UL}=0$; if the uplink subcarrier spacing is 30 kHz, $\mu_{UL}=1$; if the uplink subcarrier spacing is 60 kHz, $\mu_{UL}=2$; and if the uplink subcarrier spacing is 120 kHz, $\mu_{UL}=3$.

When a CSI reporting configuration indicates that a current CSI reporting type is aperiodic CSI reporting, if DCI that triggers the aperiodic CSI reporting and the aperiodic CSI reporting are in a same slot, the CSI reference resource is a slot in which the DCI that triggers the aperiodic CSI reporting is located. Otherwise, in another case (for example, if the DCI that triggers the aperiodic CSI reporting and the aperiodic CSI reporting are not in the same slot), $n_{ref}$ is a minimum positive integer greater than or equal to $\left\lfloor Z'/N_{symb}^{slot} \right\rfloor$, and the minimum positive integer makes n - $n_{ref}$ be a valid downlink slot (valid downlink slot), where $N_{symb}^{slot}$ represents a quantity of symbols included in one slot. In this embodiment of this application, the valid downlink slot may be understood as that one slot satisfies one or more of the following: The slot includes at least one downlink symbol or one flexible symbol (flexible symbol) configured by using higher layer signaling, and the flexible symbol may be used for downlink or uplink transmission based on a configuration on the network device side; and the slot is not within a measurement gap (measurement gap) configured on the network device side. Further, a valid downlink symbol in this embodiment of this application may be a downlink symbol or a flexible symbol configured by using higher layer signaling. A symbol interval between a time domain position of a resource on which the CSI reporting is performed and a time domain position of a corresponding measurement resource is not less than $Z'$. Otherwise, the terminal device may ignore triggering of this CSI reporting, and does not perform the CSI reporting. It may be understood that the symbol interval herein means that a symbol interval between a last symbol of the measurement resource and a first symbol of a PUSCH resource carrying corresponding CSI reporting is not less than $Z'$.

A value of $Z'$ is determined based on the quantity $N_{TRP}$ of reference signal resources used for CSI measurement. For example, the value of $Z'$ is associated with the quantity $N_{TRP}$ of NZP CSI-RS resources configured in the NZP CSI-RS resource set used for channel measurement, and a unit is a symbol. A value of $\mu$ is a subcarrier spacing configuration parameter. Generally, the value of $\mu$ is determined based on a subcarrier spacing configuration parameter $\mu_{PDCCH}$ of a PDCCH resource carrying the DCI, a subcarrier spacing configuration parameter $\mu_{UL}$ of the PUSCH resource carrying the CSI reporting, and a subcarrier spacing configuration parameter $\mu_{CSI-RS}$ of an aperiodic CSI-RS. For example, $\mu = \min(\mu_{PDCCH}, \mu_{CSI-RS}, \mu_{UL})$.

The value of $Z'$ satisfies one or more of the following. It should be understood that, that the value of $Z'$ satisfies one or more of the following may be predefined, for example, may be predefined in a protocol. Alternatively, that the value of $Z'$ satisfies one or more of the following may be preconfigured by the network device and notified to the terminal device by using signaling. Alternatively, that the value of $Z'$ satisfies one or more of the following may be determined by the network device and the terminal device through mutual negotiation through information receiving and sending. This is not limited in this application.

The value of $Z'$ and the value of $N_{TRP}$ satisfy a function relationship. For example, $Z' = \Delta_1 + f_1(N_{TRP})$, where $\Delta_1$ is a constant greater than 0. For example, the value of $Z'$ may be consistent with that of $Z'$ in $(Z, Z')$ in the current 3rd generation partnership project (3rd generation partnership project, 3GPP) TS 38.214 protocol release 17. Values of $f_1(N_{TRP})$ and $N_{TRP}$ are positively correlated with each other, that is, a larger value of $N_{TRP}$ indicates a larger value of $f_1(N_{TRP})$. For example, $f_1(N_{TRP}) = \lfloor b_1(N_{TRP} - 1) + a_1 \rfloor$, where $b_1$ is a constant greater than 0, and $a_1$ is a constant greater than or equal to 0; or $f_1(N_{TRP}) = \lfloor e_1(N_{TRP} - d_1)^2 + c_1 \rfloor$, where $c_1$ is a constant greater than or equal to 0, $d_1$ is a constant greater than or equal to 1, and $e_1$ is a constant greater than 0. Optionally, when $N_{TRP} = 1$, $f_1(N_{TRP}) = 0$.

The value of $Z'$ is positively correlated with $N_{TRP}$. For example, a larger value of $N_{TRP}$ indicates a larger value of $Z'$. It may be understood that the positive correlation herein may include a linear positive correlation and a nonlinear positive correlation.

There is a correspondence between the value of $Z'$ and the value of $N_{TRP}$, and the correspondence is as follows: Values of $N_{TRP}$ are grouped into n sets, where a quantity of values of $N_{TRP}$ in each set is greater than or equal to 1, n is greater than or equal to 2, and all values of $N_{TRP}$ in one set are greater than or less than all values of $N_{TRP}$ in another set. For a same set, when values of $N_{TRP}$ are different, values of $Z'$ are the same. For different sets, a larger value of $N_{TRP}$ in the sets indicates a larger value of $Z'$. For example, the correspondence between the value of $N_{TRP}$ and the value of $Z'$ is provided by using an example in which $\mu = 0$, as shown in Table 2:

Table 2 Correspondence between the value of $N_{TRP}$ and the value of $Z'$

| $N_{TRP}$ | $Z'$ |
|---|---|
| 1 | 37 |
| 2 | 47 |
| 3, 4 | 67 |

As shown in Table 2, $N_{TRP} = 1$ is one group, corresponding to one group of values of $Z'$, for example, 37; $N_{TRP} = 2$ is one group, corresponding to one group of values of $Z'$, for example, 47; and $N_{TRP} = 3,4$ is one group, corresponding to one group of values of $Z'$, for example, 67. It may be understood that the values in Table 2 are merely examples for description, and there may alternatively be other values. A value is not limited in this embodiment of this application. The foregoing table provides a correspondence example by using an example in which $\mu = 0$. There may be different correspondences but a same form for other values of $\mu$.

Optionally, when the terminal device reports the first capability information to the network device, the value of $Z'$ is determined based on $N_{TRP}$ and the first capability information of the terminal device, and the value of $Z'$ satisfies one or more of the following:

The value of $Z'$ satisfies a function relationship with the value of $N_{TRP}$, where a value of one or more of parameters other than $N_{TRP}$ in the function relationship is determined based on the first capability information. For example, $Z' = \Delta_2 + f_2(N_{TRP})$, where $\Delta_2$ is a constant greater than 0. For example, the value of $Z'$ may be consistent with that of $Z'$ in $(Z, Z')$ in the 3GPP TS 38.214 protocol release 17. Values of $f_2(N_{TRP})$ and $N_{TRP}$ are positively correlated with each other, that is, a larger value of $N_{TRP}$ indicates a larger value of $f_2(N_{TRP})$. For example, $f_2(N_{TRP}) = \lfloor b_2(N_{TRP} - 1) + a_2 \rfloor$, where $b_2$ is a constant greater than 0, and $a_2$ is a constant greater than or equal to 0; or $f_2(N_{TRP}) = \lfloor e_2(N_{TRP} - d_2)^2 + c_2 \rfloor$, where $c_2$

is a constant greater than or equal to 0, $d_2$ is a constant greater than or equal to 1, and $e_2$ is a constant greater than 0. Specifically, the terminal device may determine a specific value of at least one of $a_2$ and $b_2$ or at least one of $c_2$, $d_2$, and $e_2$ based on the first capability information. Optionally, the terminal device determines, based on the first capability information, which one of a plurality of predefined values is the value of at least one of $a_2$ and $b_2$ or at least one of $c_2$, $d_2$, and $e_2$.

Optionally, a correspondence between the value of $Z'$ and a value group of $N_{TRP}$ is associated with the first capability information. For example, CSI measurement and computation capability parameters in first capability information of different terminal devices correspond to correspondences between different values of $N_{TRP}$ and different values of $Z'$, and a corresponding value of $Z'$ may be determined based on a correspondence between a CSI measurement and computation capability parameter of a terminal device, a value of $N_{TRP}$, and a value of $Z'$. For example, Table 3 is as follows:

Table 3 Correspondence between the CSI measurement and computation capability parameter of the terminal device, the value of $N_{TRP}$, and the value of $Z'$

| CSI measurement and computation capability parameter of the terminal device | Value of $N_{TRP}$ | $Z'$ |
|---|---|---|
| 0 | 1 | 37 |
| | 2, 3, 4 | 46 |
| 1 | 1, 2 | 42 |
| | 3, 4 | 59 |
| 2 | 1, 2 | 49 |
| | 3, 4 | 61 |

As shown in Table 3, if the CSI measurement and computation capability parameter of the terminal device is 0, when $N_{TRP} = 1$, the value of $Z'$ may be 37, and when $N_{TRP} = 2,3,4$, the value of $Z'$ may be 46; if the CSI measurement and computation capability parameter of the terminal device is 1, when $N_{TRP} = 1,2$, the value of $Z'$ may be 42, and when $N_{TRP} = 3,4$, the value of $Z'$ may be 59; and if the CSI measurement and computation capability parameter of the terminal device is 2, when $N_{TRP} = 1,2$, the value of $Z'$ may be 49, and when $N_{TRP} = 3,4$, the value of $Z'$ may be 61. It may be understood that the values in Table 3 are merely examples for description, and there may alternatively be other values. A value is not limited in this embodiment of this application.

In a possible implementation, the value of $Z'$ may be determined based on the first capability information of the terminal device. Specifically, the terminal device may report the first capability information to indicate a CSI computation capability of the terminal device. For example, the first capability information includes the CSI measurement and computation capability parameter of the terminal device, and the network device may determine the value of $Z'$ based on the CSI measurement and computation capability parameter of the terminal device. For example, the value of $Z'$ is associated with that of the CSI measurement and computation capability parameter reported by the terminal device. For example, each of a plurality of CSI measurement and computation capability parameter values corresponds to one level of CSI computation capability, and therefore may correspond to one group of values of $Z'$. The value of $Z'$ may be determined based on a correspondence between the CSI measurement and computation capability parameter of the terminal device and the value of $Z'$. For example, the correspondence between the CSI measurement and computation capability parameter of the terminal device and the value of $Z'$ is provided by using an example in which $\mu=0$, as shown in Table 4:

Table 4 Correspondence between the CSI measurement and computation capability parameter of the terminal device and the value of $Z'$

| CSI measurement and computation capability parameter of the terminal device | $Z'$ |
|---|---|
| 0 | 37 |
| 1 | 49 |
| 2 | 70 |

As shown in Table 4, different CSI measurement and computation capability parameter values of the terminal device correspond to different CSI computation capabilities. A smaller value corresponds to a stronger CSI computation capability, and therefore the CSI measurement and computation capability parameter corresponds to a smaller value of $Z$ and/or $Z'$. If the CSI measurement and computation capability parameter of the terminal device is 0, the value of $Z'$ may be 37; if the CSI measurement and computation capability parameter of the terminal device is 1, the value of $Z'$ may be 49; and if the CSI measurement and computation capability parameter of the terminal device is 2, the value of $Z'$ may be 70. It may be understood that the values in Table 4 are merely examples for description, and there may alternatively be other values. A value is not limited in this embodiment of this application. The foregoing table provides a correspondence example by using an example in which $\mu = 0$. There may be different correspondences but a same form for other values of $\mu$.

In this embodiment, in a scenario in which the CSI reporting type is the aperiodic CSI reporting, the terminal device may determine the time domain position of the CSI reference resource based on the quantity $N_{TRP}$, that is indicated by the first information from the network device, of reference signal resources used for CSI measurement. In this embodiment of this application, the terminal device can have sufficient time to complete CSI measurement, computation, and reporting, thereby ensuring a CSI reporting success rate.

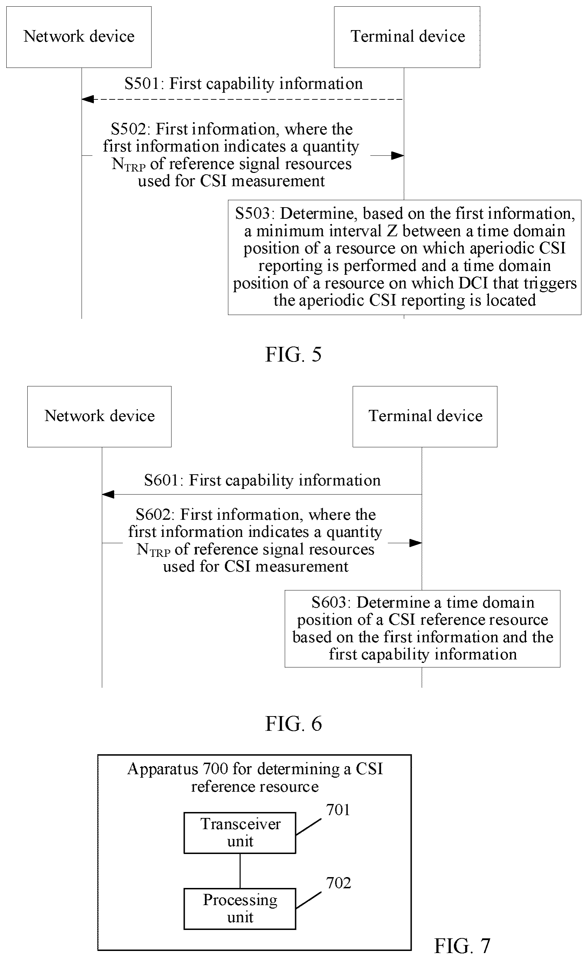

The following describes a method for determining a time domain position interval according to an embodiment of this application. It should be understood that explanations of terms in different embodiments of this application may refer to each other. To avoid redundant descriptions, a same term may not be described again in different embodiments. FIG. 5 is an interaction diagram of a method for determining a time domain position interval according to an embodiment of this application. The method for determining a time domain position interval is applicable to a scenario in which a CSI reporting type is aperiodic CSI reporting. As shown in FIG. 5, the method for determining a time domain position interval may include the following steps. Step S501 is an optional step.

S501: A terminal device reports first capability information to a network device. Correspondingly, the network device receives the first capability information from the terminal device.

It may be understood that, for step S501, refer to the descriptions of step S401. Details are not described herein again. S502: The network device sends first information to the terminal device, where the first information indicates a quantity $N_{TRP}$ of reference signal resources used for CSI measurement. Correspondingly, the terminal device receives the first information from the network device.

It may be understood that, for step S502, refer to the descriptions of step S402. Details are not described herein again. S503: The terminal device determines, based on the first information, a minimum interval Z between a time domain position of a resource on which the aperiodic CSI reporting is performed and a time domain position of a resource on which DCI that triggers the aperiodic CSI reporting is located.

The minimum interval Z between the time domain position of the resource on which the aperiodic CSI reporting is performed and the time domain position of the resource on which the DCI that triggers the aperiodic CSI reporting is located may be understood as that a symbol interval between the time domain position of the resource on which the CSI reporting is performed and the time domain position of the resource on which the DCI that triggers the CSI reporting is located is not less than Z. Otherwise, the terminal device may ignore triggering of this CSI reporting, and does not perform the CSI reporting. It may be understood that the symbol interval herein means that a symbol interval between a last symbol of a PDCCH resource carrying the DCI that triggers the CSI reporting and a first symbol of a PUSCH resource carrying corresponding CSI reporting is not less than Z.

A value of Z is determined based on the quantity $N_{TRP}$ of reference signal resources used for CSI measurement. For example, the value of Z is associated with a quantity $N_{TRP}$ of NZP CSI-RS resources configured in an NZP CSI-RS resource set used for channel measurement, and a unit is a symbol. A value of $\mu$ is a subcarrier spacing configuration parameter. Generally, the value of $\mu$ is determined based on a subcarrier spacing configuration parameter $\mu_{PDCCH}$ of the PDCCH resource carrying the DCI, a subcarrier spacing configuration parameter $\mu_{UL}$ of the PUSCH resource carrying the CSI reporting, and a subcarrier spacing configuration parameter $\mu_{CSI\text{-}RS}$ of an aperiodic CSI-RS. For example, $\mu = \min(\mu_{PDCCH}, \mu_{CSI\text{-}RS}, \mu_{UL})$.

The value of Z is determined based on the quantity $N_{TRP}$ of reference signal resources used for CSI measurement, and the value of Z satisfies one or more of the following. It should be understood that, that the value of Z satisfies one or more of the following may be predefined, for example, may be predefined in a protocol. Alternatively, that the value of Z satisfies one or more of the following may be preconfigured by the network device and notified to the terminal device by using signaling. Alternatively, that the value of Z satisfies one or more of the following may be determined by the network device and the terminal device through mutual negotiation through information receiving and sending. This is not limited in this application.

The value of Z and a value of $N_{TRP}$ satisfy a function relationship. For example, $Z = \Delta_3 + f_3(N_{TRP})$, where $\Delta_3$ is a constant greater than 0. For example, the value of Z may be consistent with that of Z in (Z,Z') in the current 3rd generation partnership project (3rd generation partnership project, 3GPP) TS 38.214 protocol release 17. Values of $f_3(N_{TRP})$ and $N_{TRP}$ are positively correlated with each other, that is, a larger value of $N_{TRP}$ indicates a larger value of $f_3(N_{TRP})$. For example, $f_3(N_{TRP}) = \lfloor b_3(N_{TRP} - 1) + a_3 \rfloor$, where $b_3$ is a constant greater than 0, and $a_3$ is a constant greater than or equal to 0; or $f_1(N_{TRP}) = \lfloor e_3(N_{TRP} - d_3)^2 + c_3 \rfloor$, where $c_3$ is a constant greater than or equal to 0, $d_3$ is a constant greater than or equal to 1, and $e_3$ is a constant greater than 0. Optionally, when $N_{TRP} = 1$, $f_3(N_{TRP}) = 0$.

The value of Z is positively correlated with $N_{TRP}$. For example, a larger value of $N_{TRP}$ indicates a larger value of Z. It may be understood that the positive correlation herein may include a linear positive correlation and a nonlinear positive correlation.

There is a correspondence between the value of Z and the value of $N_{TRP}$, and the correspondence is as follows: Values of $N_{TRP}$ are grouped into n sets, where a quantity of values of $N_{TRP}$ in each set is greater than or equal to 1, n is greater than or equal to 2, and all values of $N_{TRP}$ in one set are greater than or less than all values of $N_{TRP}$ in another set. For a same set, when values of $N_{TRP}$ are different, values of Z are the same. For different sets, a larger value of $N_{TRP}$ in the sets indicates a larger value of Z. For example, a correspondence between the value of $N_{TRP}$ and the value of Z is provided by using an example in which $\mu$=0, as shown in Table 5:

Table 5 Correspondence between the value of $N_{TRP}$ and the value of Z

| $N_{TRP}$ | Z |
|---|---|
| 1 | 40 |
| 2 | 50 |
| 3, 4 | 70 |

As shown in Table 5, $N_{TRP}$ = 1 is one group, corresponding to one group of values of Z, for example, 40; $N_{TRP}$ = 2 is one group, corresponding to one group of values of Z, for example, 50; and $N_{TRP}$ = 3,4 is one group, corresponding to one group of values of Z, for example, 70. It may be understood that the values in Table 5 are merely examples for description, and there may alternatively be other values. A value is not limited in this embodiment of this application. The foregoing table provides a correspondence example by using an example in which $\mu$=0. There may be different correspondences but a same form for other values of $\mu$.

Optionally, when the terminal device reports the first capability information to the network device, the value of Z is determined based on $N_{TRP}$ and the first capability information of the terminal device, and the value of Z satisfies one or more of the following:

The value of Z satisfies a function relationship with the value of $N_{TRP}$, where a value of one or more of parameters other than $N_{TRP}$ in the function relationship is determined based on the first capability information of the terminal device. For example, $Z = \Delta_4 + f_4(N_{TRP})$, where $\Delta_4$ is a constant greater than 0. For example, the value of Z may be consistent with that of Z in (Z, Z') in the 3GPP TS 38.214 protocol release 17. Values of $f_4(N_{TRP})$ and $N_{TRP}$ are positively correlated with each other, that is, a larger value of $N_{TRP}$ indicates a larger value of $f_4(N_{TRP})$. For example, $f_4(N_{TRP}) = \lfloor b_4(N_{TRP} - 1) + a_4 \rfloor$, where $b_4$ is a constant greater than 0, and $a_4$ is a constant greater than or equal to 0; or $f_4(N_{TRP}) = \lfloor e_4(N_{TRP} - d_4)^2 + c_4 \rfloor$, where $c_4$ is a constant greater than or equal to 0, $d_4$ is a constant greater than or equal to 1, and $e_4$ is a constant greater than 0. Specifically, the terminal device may determine a specific value of at least one of $a_4$ and $b_4$ or at least one of $c_4$, $d_4$, and $e_4$ based on the first capability information. Optionally, the terminal device determines, based on the first capability information, which one of a plurality of predefined values is the value of at least one of $a_4$ and $b_4$ or at least one of $c_4$, $d_4$, and $e_4$.

Optionally, a correspondence between the value of Z and a value group of $N_{TRP}$ is associated with the first capability information. For example, CSI measurement and computation capability parameters in first capability information of different terminal devices correspond to correspondences between different values of $N_{TRP}$ and different values of Z, and a corresponding value of Z may be determined based on a correspondence between a CSI measurement and computation capability parameter of a terminal device, a value of $N_{TRP}$, and a value of Z. For example, Table 6 is as follows:

Table 6 Correspondence between the CSI measurement and computation capability parameter of the terminal device, the value of $N_{TRP}$, and the value of Z

| CSI measurement and computation capability parameter of the terminal device | Value of $N_{TRP}$ | Z |
|---|---|---|
| 0 | 1 | 40 |
| | 2, 3, 4 | 51 |
| 1 | 1, 2 | 45 |
| | 3, 4 | 62 |
| 2 | 1, 2 | 53 |
| | 3, 4 | 74 |

As shown in Table 6, if the CSI measurement and computation capability parameter of the terminal device is 0, when $N_{TRP}$ = 1, the value of Z may be 40, and when $N_{TRP}$ = 2,3,4, the value of Z may be 51; if the CSI measurement and computation capability parameter of the terminal device is 1, when $N_{TRP}$ = 1,2, the value of Z may be 45, and when $N_{TRP}$ = 3,4, the value of Z may be 62; and if the CSI measurement and computation capability parameter of the terminal device is 2, when $N_{TRP}$ = 1,2, the value of Z may be 53, and when $N_{TRP}$ = 3,4, the value of Z may be 74. It may be understood that the values in Table 6 are merely examples for description, and there may alternatively be other values. A value is not limited in this embodiment of this application.

In a possible implementation, the value of Z may be determined based on the first capability information of the terminal device. Specifically, the terminal device may report the first capability information to indicate a CSI computation capability of the terminal device. For example, the first capability information includes the CSI measurement and computation capability parameter of the terminal device, and the network device may determine the value of Z based on the CSI measurement and computation capability parameter of the terminal device. For example, the value of Z is associated with that of the CSI measurement and computation capability parameter reported by the terminal device. For example, each of a plurality of CSI measurement and computation capability parameter values corresponds to one level of CSI computation capability, and therefore may correspond to one group of values of Z. The value of Z may be determined based on a correspondence between the CSI measurement and computation capability parameter of the terminal device and the value of Z. For example, the correspondence between the CSI measurement and computation capability parameter of the terminal device and the value of Z is provided by using an example in which μ=0, as shown in Table 7:

Table 7 Correspondence between the CSI measurement and computation capability parameter of the terminal device and the value of Z

| CSI measurement and computation capability parameter of the terminal device | Z |
|---|---|
| 0 | 40 |
| 1 | 52 |
| 2 | 73 |

As shown in Table 7, different CSI measurement and computation capability parameter values of the terminal device correspond to different CSI computation capabilities. A smaller value corresponds to a stronger CSI computation capability, and therefore the CSI measurement and computation capability parameter corresponds to a smaller value of Z. If the CSI measurement and computation capability parameter of the terminal device is 0, the value of Z may be 40; if the CSI measurement and computation capability parameter of the terminal device is 1, the value of Z may be 52; and if the CSI measurement and computation capability parameter of the terminal device is 2, the value of Z may be 73. It may be understood that the values in Table 7 are merely examples for description, and there may alternatively be other values. A value is not limited in this embodiment of this application. The foregoing table provides a correspondence example by using an example in which μ=0. There may be different correspondences but a same form for other values of μ.

In this embodiment, in a scenario in which the CSI reporting type is the aperiodic CSI reporting, the terminal device may determine, based on the quantity $N_{TRP}$, that is indicated by the first information from the network device, of reference signal resources used for CSI measurement, the minimum interval Z between the time domain position of the resource on which the aperiodic CSI reporting is performed and the time domain position of the resource on which the DCI that triggers the aperiodic CSI reporting is located. In this embodiment of this application, the terminal device can have sufficient time to complete CSI measurement, computation, and reporting, thereby ensuring a CSI reporting success rate.

The following describes another method for determining a CSI reference resource according to an embodiment of this application. It should be understood that explanations of terms in different embodiments of this application may refer to each other. To avoid redundant descriptions, a same term may not be described again in different embodiments. FIG. 6 is an interaction diagram of another method for determining a CSI reference resource according to an embodiment of this application. The method for determining a CSI reference resource is applicable to a scenario in which a CSI reporting type is periodic CSI reporting or semi-persistent CSI reporting. As shown in FIG. 6, the method for determining a CSI reference resource may include the following steps.

S601: A terminal device reports first capability information to a network device. Correspondingly, the network device receives the first capability information from the terminal device.

It may be understood that, for step S601, refer to the descriptions of step S401. Details are not described herein again. S602: The network device sends first information to the terminal device, where the first information indicates a quantity $N_{TRP}$ of reference signal resources used for CSI measurement. Correspondingly, the terminal device receives the first information from the network device.

It may be understood that, for step S602, refer to the descriptions of step S402. Details are not described herein again. S603: The terminal device determines a time domain position of the CSI reference resource based on the first information and the first capability information.

It may be understood that, for related descriptions of the CSI reference resource in step S603, refer to the foregoing descriptions of step S403. Details are not described herein again.

In addition, when a higher layer parameter codebookType indicates to perform CSI measurement based on a CJT codebook, and the CSI reporting type is the periodic reporting or the semi-persistent reporting, the time domain position of the CSI reference resource is associated with the quantity $N_{TRP}$ of reference signal resources used for CSI measurement and the first capability information reported by the terminal device. It may be understood that, for related descriptions of the quantity $N_{TRP}$ of reference signal resources in step S603, refer to the descriptions of step S403. Details are not described herein again.

In the conventional technology, a process of determining the time domain position of the CSI reference resource may be as follows: The time domain position of the CSI reference resource is determined based on a time domain position of an uplink resource used by the terminal device for CSI reporting, uplink and downlink subcarrier spacing configuration parameters, and a first parameter.

Assuming that the time domain position of the uplink resource used for the CSI reporting corresponding to the CSI reference resource is an uplink slot $n'$, the time domain position of the reference resource corresponding to the CSI reporting may be a downlink slot $n - n_{ref}$, where a value of $n_{ref}$ may be associated with a quantity $N_{TRP}$ of NZP CSI-RS resources configured in an NZP CSI-RS resource set used for channel measurement. n and $n'$ may satisfy the following formula:

$$\mathrm{n} = \left\lfloor n' \cdot \frac{2^{\mu_{DL}}}{2^{\mu_{UL}}} \right\rfloor$$

$\mu_{DL}$ and $\mu_{UL}$ are separately determined by a parameter set (numerology) configured on a network device side, and respectively represent the uplink and downlink subcarrier spacing configuration parameters; a value of $\mu_{DL}$ is related to a subcarrier spacing corresponding to downlink transmission; and a value of $\mu_{UL}$ is related to a subcarrier spacing corresponding to uplink transmission. For example, for details, refer to descriptions corresponding to Table 1. The subcarrier spacing for downlink transmission may be the same as or different from the subcarrier spacing for uplink transmission.

$n_{ref}$ is associated with the CSI reporting type, and CSI reporting configuration information indicates that a current CSI reporting type is periodic CSI reporting or semi-persistent CSI reporting.

In a possible implementation, $n_{ref}$ is a minimum positive integer greater than or equal to $f_5(N_{TRP}) \cdot 2^{\mu_{DL}}$, so that n - $n_{ref}$ is a valid downlink slot (valid downlink slot), where $f_5(N_{TRP})$ represents the first parameter, and a value of $f_5(N_{TRP})$ is a positive integer. The first parameter $f_5(N_{TRP})$ may be determined based on a value of $N_{TRP}$ and the first capability information that is reported by the terminal device. For example, the first parameter $f_5(N_{TRP})$ may satisfy one or more of the following. It should be understood that, that the first parameter $f_5(N_{TRP})$ satisfies one or more of the following may be predefined, for example, may be predefined in a protocol. Alternatively, that the first parameter $f_5(N_{TRP})$ satisfies one or more of the following may be preconfigured by the network device and notified to the terminal device by using signaling. Alternatively, that the first parameter $f_5(N_{TRP})$ satisfies one or more of the following may be determined by the network device and the terminal device through mutual negotiation through information receiving and sending. This is not limited in this application.

The first parameter $f_5(N_{TRP})$ satisfies a function relationship with the value of $N_{TRP}$, where a value of one or more of parameters other than $N_{TRP}$ in the function relationship is determined based on the first capability information reported by the terminal device. For example, $f_5(N_{TRP}) = \lfloor b_5(N_{TRP} - 1) + a_5 \rfloor$, where $a_5$ and $b_5$ are constants greater than 0; or

$f_5(N_{TRP}) = \lfloor e_5(N_{TRP} - d_5)^2 + c_5 \rfloor$, where $c_5$ is a constant greater than or equal to 0, $d_5$ is a constant greater than or equal to 1, and $e_5$ is a constant greater than 0. In an embodiment, when a value of $a_5$ or $c_5$ is 4, and $N_{TRP} = 1$, $f_5(N_{TRP}) = 4$. In another embodiment, the terminal device may report the first capability information to indicate a CSI computation capability of the terminal device, and the network device may determine a specific value of at least one of $a_5$ and $b_5$ or at least one of $c_5$, $d_5$, and $e_5$ based on the first capability information reported by the terminal device, for example, determine, based on the first capability information sent by the terminal device, which one of a plurality of predefined values is the value of at least one of $a_5$ and $b_5$ or at least one of $c_5$, $d_5$, and $e_5$.

Values of the first parameter $f_5(N_{TRP})$ and $N_{TRP}$ are positively correlated with each other, for example, a larger value of $N_{TRP}$ indicates a larger value of the first parameter $f_5(N_{TRP})$. It may be understood that the positive correlation herein may include a linear positive correlation and a nonlinear positive correlation.

The value of the first parameter $f_5(N_{TRP})$ may be determined based on the first capability information of the terminal device. Specifically, the terminal device may report the first capability information to indicate the CSI computation capability of the terminal device. For example, the first capability information includes a CSI measurement and computation capability parameter of the terminal device, and the network device may determine the value of the first parameter $f_5(N_{TRP})$ based on the CSI measurement and computation capability parameter of the terminal device. For example, the value of the first parameter $f_5(N_{TRP})$ varies with the terminal device. A CSI measurement and computation capability parameter value of each terminal device in CSI measurement and computation capability parameter values of a plurality of terminal devices may correspond to one group of values of the first parameter $f_5(N_{TRP})$. The value of the first parameter $f_5(N_{TRP})$ may be determined based on a correspondence between the CSI measurement and computation capability parameter of a terminal device and the value of the first parameter $f_5(N_{TRP})$. For example, Table 8 is as follows:

Table 8 Correspondence between the CSI measurement and computation capability parameter of the terminal device and the value of the first parameter $f_5(N_{TRP})$

| CSI measurement and computation capability parameter of the terminal device | Value of the first parameter $f_5(N_{TRP})$ |
|---|---|
| 0 | 5 |
| 1 | 7 |
| 2 | 10 |

As shown in Table 8, if the CSI measurement and computation capability parameter of the terminal device is 0, the value of the first parameter $f_5(N_{TRP})$ may be 5; if the CSI measurement and computation capability parameter of the terminal device is 1, the value of the first parameter $f_5(N_{TRP})$ may be 7; and if the CSI measurement and computation capability parameter of the terminal device is 2, the value of the first parameter $f_5(N_{TRP})$ may be 10. It may be understood that the values in Table 8 are merely examples for description, and there may alternatively be other values. A value is not limited in this embodiment of this application.

A correspondence between the value of the first parameter $f_5(N_{TRP})$ and the value of $N_{TRP}$ may vary with the CSI measurement and computation capability parameter in the first capability information reported by the terminal device. For example, Table 9 is as follows:

Table 9 Correspondence between the CSI measurement and computation capability parameter of the terminal device, the value of $N_{TRP}$, and the value of the first parameter $f_5(N_{TRP})$

| CSI measurement and computation capability parameter of the terminal device | Value of $N_{TRP}$ | Value of the first parameter $f_5(N_{TRP})$ |
|---|---|---|
| 0 | 1 | 3 |
| | 2 | 5 |
| | 3, 4 | 8 |
| 1 | 1 | 4 |
| | 2 | 6 |
| | 3, 4 | 10 |
| 2 | 1 | 5 |
| | 2 | 9 |
| | 3, 4 | 12 |

As shown in Table 9, if the CSI measurement and computation capability parameter of the terminal device is 0, when $N_{TRP} = 1$, the value of the first parameter $f_5(N_{TRP})$ may be 3, when $N_{TRP} = 2$, the value of the first parameter $f_5(N_{TRP})$ may be 5, and when $N_{TRP} = 3,4$, the value of the first parameter $f_5(N_{TRP})$ may be 8; if the CSI measurement and computation capability parameter of the terminal device is 1, when $N_{TRP} = 1$, the value of the first parameter $f_5(N_{TRP})$ may be 4, when $N_{TRP} = 2$, the value of the first parameter $f_5(N_{TRP})$ may be 6, and when $N_{TRP} = 3,4$, the value of the first parameter $f_5(N_{TRP})$ may be 10; and if the CSI measurement and computation capability parameter of the terminal device is 2, when $N_{TRP} = 1$, the value of the first parameter $f_5(N_{TRP})$ may be 5, when $N_{TRP} = 2$, the value of the first parameter $f_5(N_{TRP})$ may be 9, and when $N_{TRP} = 3,4$, the value of the first parameter $f_5(N_{TRP})$ may be 12. It may be understood that the values in Table 9 are merely examples for description, and there may alternatively be other values. A value is not limited in this embodiment of this application.

It may be understood that the foregoing first parameter is merely described by using $f_5(N_{TRP})$ as an example. Alternatively, the first parameter may be N or represented in another form. This is not limited in this embodiment of this application. In addition, the rounding symbol in the function relationship provided above is merely an example for description, and the rounding symbol may be rounding up or rounding down. This is not limited in this application. Optionally, the method may further include step S403: The terminal device determines a CSI measurement resource based on a configuration, and performs channel measurement and interference measurement on the CSI measurement resource.

Optionally, the method may further include step S404: The terminal device determines a CSI reporting resource based on the first information, generates CSI based on channel measurement and interference measurement, and reports the CSI to the network device on the CSI reporting resource.

In this embodiment, in a scenario in which the CSI reporting type is the periodic CSI reporting or the semi-persistent CSI reporting, the terminal device may determine the time domain position of the CSI reference resource based on the first information from the network device, where the time domain position of the CSI reference resource is associated with the quantity of reference signal resources used for CSI measurement and the first capability information reported by the terminal device. The value of $n_{ref}$ in this embodiment of this application is not only related to the quantity of reference signal resources, but also may be associated with the first capability information reported by the terminal device. This can ensure that the terminal device can complete CSI measurement, computation, and reporting, thereby increasing a CSI reporting success rate.

The foregoing describes the method embodiments provided in embodiments of this application. The following describes apparatus embodiments in embodiments of this application.

FIG. 7 is a diagram of a structure of an apparatus for determining a CSI reference resource according to an embodiment of this application. The apparatus may be a terminal device, or may be an apparatus (for example, a chip, a chip system, or a circuit) in the terminal device. As shown in FIG. 7, the apparatus 700 includes at least a transceiver unit 701 and a processing unit 702.

In a possible implementation:

the transceiver unit 701 is configured to receive first information from a network device, where the first information indicates a quantity $N_{TRP}$ of reference signal resources used for CSI measurement, a CSI reporting type is aperiodic CSI reporting, and $N_{TRP}$ is a positive integer greater than or equal to 1; and
the processing unit 702 is configured to determine a time domain position of the CSI reference resource based on the first information.

In an implementation, when determining the time domain position of the CSI reference resource based on the first information, the processing unit 702 is specifically configured to:
determine the time domain position of the CSI reference resource based on a reference slot interval $n_{ref}$, where when downlink control information DCI that triggers the aperiodic CSI reporting and the aperiodic CSI reporting are not in a same slot, $n_{ref}$ is a minimum positive integer greater than or equal to $\lfloor Z'/N_{symb}^{slot} \rfloor$, $N_{symb}^{slot}$ represents a quantity of symbols included in one slot, and a value of $Z'$ is determined based on $N_{TRP}$.

In an implementation, a value of at least one of $Z'$ and $Z$ satisfies one or more of the following:

satisfying a function relationship with a value of $N_{TRP}$;
being positively correlated with the value of $N_{TRP}$; and
having a correspondence with a value group of $N_{TRP}$.

In an implementation, the transceiver unit 701 is further configured to send first capability information to the network device, where the first capability information indicates a CSI measurement and computation capability of the terminal device.

In an implementation, a value of at least one of $Z'$ and $Z$ satisfies one or more of the following:

satisfying a function relationship with a value of $N_{TRP}$, where a value of one or more of parameters other than $N_{TRP}$ in the function relationship is determined based on the first capability information; and
having a correspondence with a value group of $N_{TRP}$, where the correspondence between the value of at least one of $Z'$ and $Z$ and the value of $N_{TRP}$ is associated with the first capability information.

In another possible implementation:

the transceiver unit 701 is configured to receive first information from a network device, where the first information indicates a quantity $N_{TRP}$ of reference signal resources used for CSI measurement, a CSI reporting type is periodic CSI reporting or semi-persistent CSI reporting, and $N_{TRP}$ is a positive integer greater than or equal to 1; and
the processing unit 702 is configured to determine a time domain position of the CSI reference resource based on the first information and first capability information that is reported by the terminal device.

In an implementation, when determining the time domain position of the CSI reference resource based on the first information and the first capability information that is reported by the terminal device, the processing unit 702 is specifically configured to: determine the time domain position of the CSI reference resource based on a first parameter, where the first parameter is determined based on a value of $N_{TRP}$ and the first capability information that is reported by the terminal device.

In an implementation, the first parameter satisfies one or more of the following:

satisfying a function relationship with the value of $N_{TRP}$, where a value of one or more of parameters other than $N_{TRP}$ in the function relationship is determined based on the first capability information; and

having a correspondence with a value group of $N_{TRP}$, where the correspondence between a value of the first parameter and the value of $N_{TRP}$ is associated with the first capability information.

In an implementation, the transceiver unit 701 is further configured to send the first capability information to the network device, where the first capability information indicates a CSI measurement and computation capability of the terminal device.

For more detailed descriptions of the transceiver unit 701 and the processing unit 702, directly refer to the related descriptions of the terminal device in the foregoing method embodiments shown in FIG. 4 and FIG. 6. Details are not described herein again.

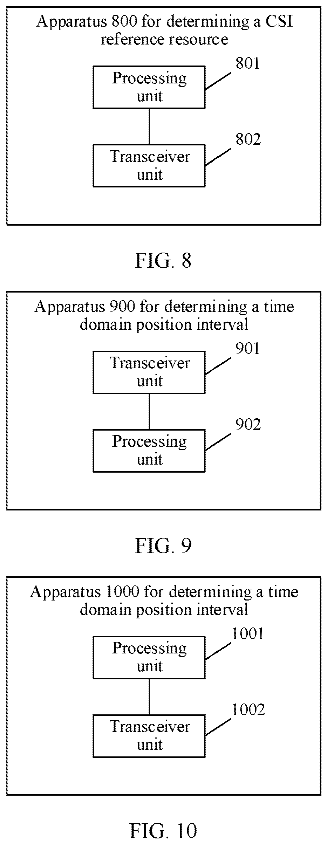

FIG. 8 is a diagram of a structure of another apparatus for determining a CSI reference resource according to an embodiment of this application. The communication apparatus may be a network device, or may be an apparatus (for example, a chip, a chip system, or a circuit) in the network device. As shown in FIG. 8, the apparatus 800 for determining a CSI reference resource includes at least a processing unit 801 and a transceiver unit 802.

In a possible implementation:

the processing unit 801 is configured to determine first information, where the first information indicates a quantity $N_{TRP}$ of reference signal resources used for CSI measurement, a CSI reporting type is aperiodic CSI reporting, and $N_{TRP}$ is a positive integer greater than or equal to 1; and

the transceiver unit 802 is configured to send the first information to a terminal device, where a time domain position of the CSI reference resource is determined based on the first information.

In an implementation, that the time domain position of the CSI reference resource is determined based on the first information includes:

The time domain position of the CSI reference resource is determined based on a reference slot interval $n_{ref}$, where when downlink control information DCI that triggers the aperiodic CSI reporting and the aperiodic CSI reporting are not in a same slot, $n_{ref}$ is a minimum positive integer greater than or equal to $\left\lfloor Z'/N_{symb}^{slot} \right\rfloor$, $N_{symb}^{slot}$ represents a quantity of symbols included in one slot, and a value of $Z'$ is determined based on $N_{TRP}$.

In an implementation, a value of at least one of $Z'$ and $Z$ satisfies one or more of the following:

satisfying a function relationship with a value of $N_{TRP}$;
being positively correlated with the value of $N_{TRP}$; and
having a correspondence with a value group of $N_{TRP}$.

In an implementation, the transceiver unit 802 is further configured to receive first capability information from the terminal device, where the first capability information indicates a CSI measurement and computation capability of the terminal device.

In an implementation, a value of at least one of $Z'$ and $Z$ satisfies one or more of the following:

satisfying a function relationship with a value of $N_{TRP}$, where a value of one or more of parameters other than $N_{TRP}$ in the function relationship is determined based on the first capability information; and

having a correspondence with a value group of $N_{TRP}$, where the correspondence between the value of at least one of $Z'$ and $Z$ and the value of $N_{TRP}$ is associated with the first capability information.

In another possible implementation:

the transceiver unit 802 is configured to send first information to a terminal device, where the first information indicates a quantity $N_{TRP}$ of reference signal resources used for CSI measurement, a CSI reporting type is periodic CSI reporting or semi-persistent CSI reporting, and $N_{TRP}$ is a positive integer greater than or equal to 1; and the transceiver unit 802 is further configured to receive first capability information from the terminal device, where a time domain position of the CSI reference resource is determined based on the first information and the first capability information that is reported by the terminal device.

In an implementation, that the time domain position of the CSI reference resource is determined based on the first information and the first capability information that is reported by the terminal device includes: The time domain position of the CSI reference resource is determined based on a first parameter, where the first parameter is determined based on a value of $N_{TRP}$ and the first capability information that is reported by the terminal device.

In an implementation, the first parameter satisfies one or more of the following:

satisfying a function relationship with the value of $N_{TRP}$, where a value of one or more of parameters other than $N_{TRP}$ in the function relationship is determined based on the first capability information reported by the terminal device; and having a correspondence with a value group of $N_{TRP}$, where the correspondence between a value of the first parameter and the value of $N_{TRP}$ is associated with the first capability information.

In an implementation, the transceiver unit 802 is further configured to receive the first capability information from the terminal device, where the first capability information indicates a CSI measurement and computation capability of the terminal device.

For more detailed descriptions of the processing unit 801 and the transceiver unit 802, directly refer to the related descriptions of the network device in the foregoing method embodiments shown in FIG. 4 and FIG. 6. Details are not described herein.

FIG. 9 is a diagram of a structure of an apparatus for determining a time domain position interval according to an embodiment of this application. The apparatus may be a terminal device, or may be an apparatus (for example, a chip, a chip system, or a circuit) in the terminal device. As shown in FIG. 9, the apparatus 900 for determining a time domain position interval includes at least a transceiver unit 901 and a processing unit 902.

The transceiver unit 901 is configured to receive first information from a network device, where the first information indicates a quantity $N_{TRP}$ of reference signal resources used for CSI measurement, a CSI reporting type is aperiodic CSI reporting, and $N_{TRP}$ is a positive integer greater than or equal to 1.

The processing unit 902 is configured to determine, based on the first information, a minimum interval Z between a time domain position of a resource on which the aperiodic CSI reporting is performed and a time domain position of a resource on which DCI that triggers the aperiodic CSI reporting is located.

In an implementation, a value of at least one of Z' and Z satisfies one or more of the following:

satisfying a function relationship with a value of $N_{TRP}$;
being positively correlated with the value of $N_{TRP}$; and
having a correspondence with a value group of $N_{TRP}$.

In an implementation, the transceiver unit 901 is further configured to send first capability information to the network device, where the first capability information indicates a CSI measurement and computation capability of the terminal device.

In an implementation, a value of at least one of Z' and Z satisfies one or more of the following:

satisfying a function relationship with a value of $N_{TRP}$, where a value of one or more of parameters other than $N_{TRP}$ in the function relationship is determined based on the first capability information; and
having a correspondence with a value group of $N_{TRP}$, where the correspondence between the value of at least one of Z' and Z and the value of $N_{TRP}$ is associated with the first capability information.

For more detailed descriptions of the transceiver unit 901 and the processing unit 902, directly refer to the related descriptions of the terminal device in the foregoing method embodiment shown in FIG. 5. Details are not described herein again.

FIG. 10 is a diagram of a structure of another apparatus for determining a time domain position interval according to an embodiment of this application. The communication apparatus may be a network device, or may be an apparatus (for example, a chip, a chip system, or a circuit) in the network device. As shown in FIG. 10, the apparatus 1000 for determining a time domain position interval includes at least a processing unit 1001 and a transceiver unit 1002.

The processing unit 1001 is configured to determine first information, where the first information indicates a quantity $N_{TRP}$ of reference signal resources used for CSI measurement, a CSI reporting type is aperiodic CSI reporting, and $N_{TRP}$ is a positive integer greater than or equal to 1.

The transceiver unit 1002 is configured to send the first information to a terminal device, where a minimum interval Z between a time domain position of a resource on which the aperiodic CSI reporting is performed and a time domain position of a resource on which DCI that triggers the aperiodic CSI reporting is located is determined based on the first information.

In an implementation, a value of at least one of Z' and Z satisfies one or more of the following:

satisfying a function relationship with a value of $N_{TRP}$;
being positively correlated with the value of $N_{TRP}$; and
having a correspondence with a value group of $N_{TRP}$.

In an implementation, the transceiver unit 1002 is further configured to receive first capability information from the terminal device, where the first capability information indicates a CSI measurement and computation capability of the terminal device.

In an implementation, a value of at least one of Z' and Z satisfies one or more of the following:

satisfying a function relationship with a value of $N_{TRP}$, where a value of one or more of parameters other than $N_{TRP}$ in the function relationship is determined based on the first capability information; and
having a correspondence with a value group of $N_{TRP}$, where the correspondence between the value of at least one of Z' and Z and the value of $N_{TRP}$ is associated with the first capability information.

For more detailed descriptions of the processing unit 1001 and the transceiver unit 1002, directly refer to the related descriptions of the network device in the foregoing method embodiment shown in FIG. 5. Details are not described herein.

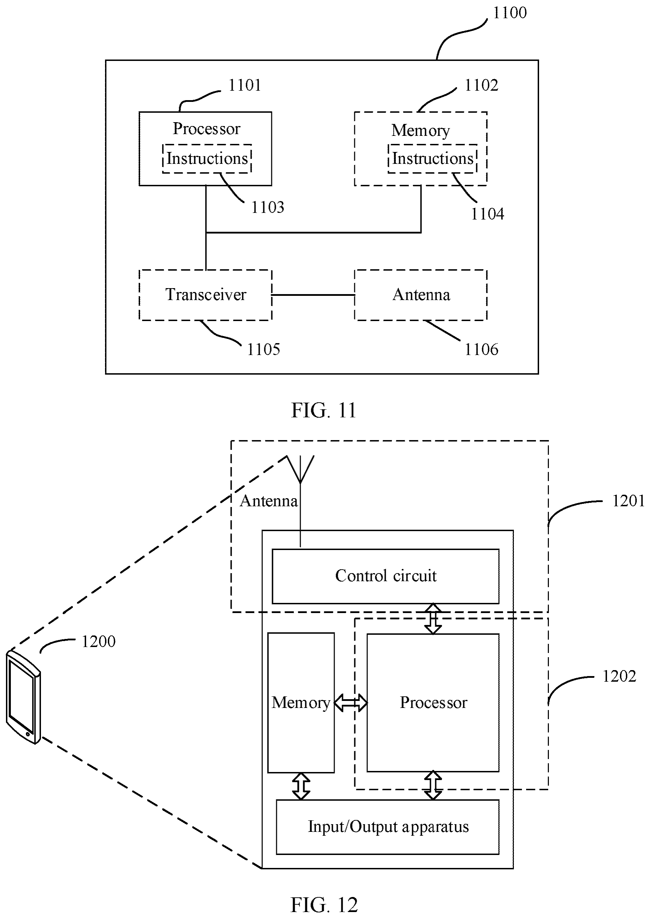

FIG. 11 is a diagram of a structure of another communication apparatus according to an embodiment of this application. As shown in FIG. 11, the apparatus 1100 may include one or more processors 1101, and the processor 1101 may also be referred to as a processing unit, and may implement a specific control function. The processor 1101 may be a general-purpose processor, a special-purpose processor, or the like. For example, the processor 1101 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1101 may alternatively store instructions 1103 and/or data, and the instructions 1103 and/or the data may be run by the processor, to enable the apparatus 1100 to perform the methods described in the foregoing method embodiments.

In another optional design, the processor 1101 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to perform signal transmission or transfer.

In still another possible design, the apparatus 1100 may include a circuit, and the circuit may implement a sending, receiving, or communication function in the foregoing method embodiments.

Optionally, the apparatus 1100 may include one or more memories 1102. The memory 1102 may store instructions 1104 and/or data, and the instructions 1104 and/or the data may be run on the processor, to enable the apparatus 1100 to perform the methods described in the foregoing method embodiments. Optionally, the memory may further store data. Optionally, the processor may also store instructions and/or data. The processor and the memory may be independently disposed, or may be integrated together. For example, the correspondence described in the foregoing method embodiments may be stored in the memory or stored in the processor.

Optionally, the apparatus 1100 may further include a transceiver 1105 and/or an antenna 1106. The processor 1101 may be referred to as a processing unit, and control the apparatus 1100. The transceiver 1105 may be referred to as a transceiver unit, a transceiver machine, a transceiver circuit, a transceiver apparatus, a transceiver module, or the like, and is configured to implement a transceiver function.

Optionally, the apparatus 1100 in this embodiment of this application may be configured to perform the methods described in FIG. 4 to FIG. 6 in embodiments of this application.

In an implementation, the communication apparatus 1100 may be a terminal device, or may be an apparatus (for example, a chip, a chip system, or a circuit) in the terminal device. When the computer program instructions stored in the memory 1102 are executed, the processor 1101 is configured to perform the operations performed by the processing unit 702 in the foregoing embodiment or perform the operations performed by the processing unit 902 in the foregoing embodiment, the transceiver 1105 is configured to perform the operations performed by the transceiver unit 701 in the foregoing embodiment or perform the operations performed by the transceiver unit 901 in the foregoing embodiment, and the transceiver 1105 is further configured to send information to a communication apparatus other than the communication apparatus. The terminal device or the apparatus in the terminal device may be further configured to perform various methods performed by the terminal device in the method embodiments in FIG. 4 to FIG. 6. Details are not described again.

In an implementation, the communication apparatus 1100 may be a network device, or may be an apparatus (for example, a chip, a chip system, or a circuit) in the network device. When the computer program instructions stored in the memory 1102 are executed, the processor 1101 is configured to perform the operations performed by the processing unit 801 in the foregoing embodiment or perform the operations performed by the processing unit 1001 in the foregoing embodiment, the transceiver 1105 is configured to perform the operations performed by the transceiver unit 802 in the foregoing embodiment or perform the operations performed by the transceiver unit 1002 in the foregoing embodiment, and the transceiver 1105 is further configured to receive information from a communication apparatus other than the communication apparatus. The network device or the apparatus in the network device may be further configured to perform various methods performed by the network device in the method embodiments in FIG. 4 to FIG. 6. Details are not described again.

The processor and the transceiver described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (N-channel metal oxide semiconductor, NMOS), a P-channel metal oxide semiconductor (P-channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a first communication device or a second communication device. However, a scope of the apparatus described in this application is not limited thereto, and a structure of the apparatus may not be limited to FIG. 11. The apparatus may be an independent device, or may be a part of a large device. For example, the apparatus may be:

(1) an independent integrated circuit IC, a chip, or a chip system or subsystem;
(2) a set having one or more ICs, where optionally, the IC set may also include a storage component configured to store data and/or instructions;
(3) an ASIC, such as a modem (mobile station modem, MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

FIG. 12 is a diagram of a structure of a terminal device according to an embodiment of this application. For ease of description, FIG. 12 shows only main components of the terminal device. As shown in FIG. 12, the terminal device 1200 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data that is input by a user and output data to the user.

After the terminal is powered on, the processor may read the software program in the storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form through the antenna. When data is sent to the terminal, the radio frequency circuit receives a radio frequency signal through the antenna, further converts the radio frequency signal into a baseband signal, and outputs the baseband signal to the processor. The processor converts the baseband signal into data, and processes the data.

For ease of description, FIG. 12 shows only one memory and one processor. In an actual terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data, and the central processing unit is mainly configured to: control the entire terminal, execute a software program, and process data of the software program. The processor in FIG. 12 integrates functions of the baseband processor and the central processing unit. Persons skilled in the art may understand that the baseband processor and the central processing unit may alternatively be processors independent of each other, and are interconnected through a technology such as a bus. Persons skilled in the art may understand that the terminal may include a plurality of baseband processors to adapt to different network standards, the terminal may include a plurality of central processing units to enhance a processing capability of the terminal, and all the components of the terminal may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1201 of the terminal device 1200, and the processor that has a processing function may be considered as a processing unit 1202 of the terminal device 1200. As shown in FIG. 12, the terminal device 1200 includes the transceiver unit 1201 and the processing unit 1202. The transceiver unit may also be referred to as a transceiver, a transceiver machine, a transceiver apparatus, or the like. Optionally, a component that is in the transceiver unit 1201 and that is configured to implement a receiving function may be considered as a receiving unit, and a component that is in the transceiver unit 1201 and that is configured to implement a sending function may be considered as a sending unit. In other words, the transceiver unit 1201 includes a receiving unit and a sending unit. For example, the receiving unit may also be referred to as a receiver, a receiver machine, or a receiver circuit, and the sending unit may also be referred to as a transmitter, a transmitter machine, or a transmitter circuit. Optionally, the receiving unit and the sending unit may be one integrated unit, or may be a plurality of independent units. The receiving unit and the sending unit may be in one geographical position, or may be distributed in a plurality of geographical positions.

In an implementation, the processing unit 1202 is configured to perform the operations performed by the processing unit 702 in the foregoing embodiment or perform the operations performed by the processing unit 902 in the foregoing embodiment, and the transceiver unit 1201 is configured to perform the operations performed by the transceiver unit 701 in the foregoing embodiment or perform the operations performed by the transceiver unit 901 in the foregoing embodiment. The terminal device 1200 may be further configured to perform various methods performed by the terminal device in the method embodiments in FIG. 4 to FIG. 6. Details are not described again.

An embodiment of this application further provides a computer-readable storage medium. The computer-readable storage medium stores a computer program. When the program is executed by a processor, a procedure related to the terminal device in the method provided in the foregoing method embodiment can be implemented.

An embodiment of this application further provides a computer-readable storage medium. The computer-readable storage medium stores a computer program. When the program is executed by a processor, a procedure related to the network device in the method provided in the foregoing method embodiment may be implemented.

An embodiment of this application further provides a computer program product. When the computer program product runs on a computer or a processor, the computer or the processor is enabled to perform one or more steps in any one of the foregoing methods. When the foregoing modules in the device are implemented in a form of a software functional unit and sold or used as an independent product, the modules may be stored in a computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in any one of the method embodiments corresponding to FIG. 4 to FIG. 6. The chip system may include a chip, or may include a chip and another discrete device.

An embodiment of this application further discloses a communication system. The system includes a terminal device and a network device. For specific descriptions, refer to the methods shown in FIG. 4 to FIG. 6.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that, when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the methods in embodiments of this application may be adjusted, combined, or removed based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A method for determining a channel state information CSI reference resource, wherein the method comprises:

   receiving, by a terminal device, first information from a network device, wherein the first information indicates a quantity $N_{TRP}$ of reference signal resources used for CSI measurement, a CSI reporting type is aperiodic CSI reporting, and $N_{TRP}$ is a positive integer greater than or equal to 1; and
   determining, by the terminal device, a time domain position of the CSI reference resource based on the first information.

2. A method for determining a time domain position interval, wherein the method comprises:

   receiving, by a terminal device, first information from a network device, wherein the first information indicates a quantity $N_{TRP}$ of reference signal resources used for channel state information CSI measurement, a CSI reporting type is aperiodic CSI reporting, and $N_{TRP}$ is a positive integer greater than or equal to 1; and
   determining, by the terminal device based on the first information, a minimum interval Z between a time domain position of a resource on which the aperiodic CSI reporting is performed and a time domain position of a resource on which downlink control information DCI that triggers the aperiodic CSI reporting is located.

3. The method according to claim 1, wherein determining, by the terminal device, the time domain position of the CSI reference resource based on the first information comprises:
   determining, by the terminal device, the time domain position of the CSI reference resource based on a reference slot interval $n_{ref}$, wherein when downlink control information DCI that triggers the aperiodic CSI reporting and the aperiodic CSI reporting are not in a same slot, $n_{ref}$ is a minimum positive integer greater than or equal to $\lfloor Z'/N_{symb}^{slot} \rfloor$, $N_{symb}^{slot}$ represents a quantity of symbols comprised in one slot, and a value of Z' is determined based on $N_{TRP}$.

4. The method according to claim 2 or 3, wherein a value of at least one of Z' and Z satisfies one or more of the following:

   satisfying a function relationship with a value of $N_{TRP}$;
   being positively correlated with the value of $N_{TRP}$; and
   having a correspondence with a value group of $N_{TRP}$.

5. The method according to claim 2 or 3, wherein the method further comprises:
   sending, by the terminal device, first capability information to the network device, wherein the first capability information indicates a CSI measurement and computation capability of the terminal device.

6. The method according to claim 5, wherein a value of at least one of Z' and Z satisfies one or more of the following:

   satisfying a function relationship with a value of $N_{TRP}$, wherein a value of one or more of parameters other than $N_{TRP}$ in the function relationship is determined based on the first capability information; and
   having a correspondence with a value group of $N_{TRP}$, wherein the correspondence between the value of at least one of Z' and Z and the value of $N_{TRP}$ is associated with the first capability information.

7. A method for determining a channel state information CSI reference resource, wherein the method comprises:

   determining, by a network device, first information, wherein the first information indicates a quantity $N_{TRP}$ of reference signal resources used for CSI measurement, a CSI reporting type is aperiodic CSI reporting, and $N_{TRP}$ is a positive integer greater than or equal to 1; and
   sending, by the network device, the first information to a terminal device, wherein a time domain position of the CSI reference resource is determined based on the first information.

8. A method for determining a time domain position interval, wherein the method comprises:

   determining, by a network device, first information, wherein the first information indicates a quantity $N_{TRP}$ of reference signal resources used for channel state information CSI measurement, a CSI reporting type is aperiodic CSI reporting, and $N_{TRP}$ is a positive integer greater than or equal to 1; and

   sending, by the network device, the first information to a terminal device, wherein a minimum interval Z between a time domain position of a resource on which the aperiodic CSI reporting is performed and a time domain position of a resource on which downlink control information DCI that triggers the aperiodic CSI reporting is located is determined based on the first information.

9. The method according to claim 7, wherein that the time domain position of the CSI reference resource is determined based on the first information comprises:

   the time domain position of the CSI reference resource is determined based on a reference slot interval $n_{ref}$, wherein when downlink control information DCI that triggers the aperiodic CSI reporting and the aperiodic CSI reporting are not in a same slot, $n_{ref}$ is a minimum positive integer greater than or equal to $\lfloor Z'/N_{symb}^{slot} \rfloor$, $N_{symb}^{slot}$ represents a quantity of symbols comprised in one slot, and a value of Z' is determined based on $N_{TRP}$.

10. The method according to claim 8 or 9, wherein a value of at least one of Z' and Z satisfies one or more of the following:

    satisfying a function relationship with a value of $N_{TRP}$;

    being positively correlated with the value of $N_{TRP}$; and

    having a correspondence with a value group of $N_{TRP}$.

11. The method according to claim 8 or 9, wherein the method further comprises:

    receiving, by the network device, first capability information from the terminal device, wherein the first capability information indicates a CSI measurement and computation capability of the terminal device.

12. The method according to claim 11, wherein a value of at least one of Z' and Z satisfies one or more of the following:

    satisfying a function relationship with a value of $N_{TRP}$, wherein a value of one or more of parameters other than $N_{TRP}$ in the function relationship is determined based on the first capability information; and

    having a correspondence with a value group of $N_{TRP}$, wherein the correspondence between the value of at least one of Z' and Z and the value of $N_{TRP}$ is associated with the first capability information.

13. An apparatus for determining a channel state information CSI reference resource, wherein the apparatus comprises:

    a transceiver unit, configured to receive first information from a network device, wherein the first information indicates a quantity $N_{TRP}$ of reference signal resources used for CSI measurement, a CSI reporting type is aperiodic CSI reporting, and $N_{TRP}$ is a positive integer greater than or equal to 1; and

    a processing unit, configured to determine a time domain position of the CSI reference resource based on the first information.

14. An apparatus for determining a time domain position interval, wherein the apparatus comprises:

    a transceiver unit, configured to receive first information from a network device, wherein the first information indicates a quantity $N_{TRP}$ of reference signal resources used for channel state information CSI measurement, a CSI reporting type is aperiodic CSI reporting, and $N_{TRP}$ is a positive integer greater than or equal to 1; and

    a processing unit, configured to determine, based on the first information, a minimum interval Z between a time domain position of a resource on which the aperiodic CSI reporting is performed and a time domain position of a resource on which downlink control information DCI that triggers the aperiodic CSI reporting is located.

15. The apparatus according to claim 13, wherein when determining the time domain position of the CSI reference resource based on the first information, the processing unit is specifically configured to:

    determine the time domain position of the CSI reference resource based on a reference slot interval $n_{ref}$, wherein when downlink control information DCI that triggers the aperiodic CSI reporting and the aperiodic CSI reporting are not in a same slot, $n_{ref}$ is a minimum positive integer greater than or equal to $\lfloor Z'/N_{symb}^{slot} \rfloor$, $N_{symb}^{slot}$ represents a quantity of symbols comprised in one slot, and a value of Z' is determined based on $N_{TRP}$.

**16.** The apparatus according to claim 14 or 15, wherein a value of at least one of $Z'$ and $Z$ satisfies one or more of the following:

satisfying a function relationship with a value of $N_{TRP}$;
being positively correlated with the value of $N_{TRP}$; and
having a correspondence with a value group of $N_{TRP}$.

**17.** The apparatus according to claim 14 or 15, wherein the transceiver unit is further configured to send first capability information to the network device, wherein the first capability information indicates a CSI measurement and computation capability of the terminal device.

**18.** The apparatus according to claim 17, wherein a value of at least one of $Z'$ and $Z$ satisfies one or more of the following:

satisfying a function relationship with a value of $N_{TRP}$, wherein a value of one or more of parameters other than $N_{TRP}$ in the function relationship is determined based on the first capability information; and
having a correspondence with a value group of $N_{TRP}$, wherein the correspondence between the value of at least one of $Z'$ and $Z$ and the value of $N_{TRP}$ is associated with the first capability information.

**19.** An apparatus for determining a channel state information CSI reference resource, wherein the apparatus comprises:

a processing unit, configured to determine first information, wherein the first information indicates a quantity $N_{TRP}$ of reference signal resources used for CSI measurement, a CSI reporting type is aperiodic CSI reporting, and $N_{TRP}$ is a positive integer greater than or equal to 1; and
a transceiver unit, configured to send the first information to a terminal device, wherein a time domain position of the CSI reference resource is determined based on the first information.

**20.** An apparatus for determining a time domain position interval, wherein the apparatus comprises:

a processing unit, configured to determine first information, wherein the first information indicates a quantity $N_{TRP}$ of reference signal resources used for channel state information CSI measurement, a CSI reporting type is aperiodic CSI reporting, and $N_{TRP}$ is a positive integer greater than or equal to 1; and
a transceiver unit, configured to send the first information to a terminal device, wherein a minimum interval $Z$ between a time domain position of a resource on which the aperiodic CSI reporting is performed and a time domain position of a resource on which downlink control information DCI that triggers the aperiodic CSI reporting is located is determined based on the first information.

**21.** The apparatus according to claim 19, wherein that the time domain position of the CSI reference resource is determined based on the first information comprises:
the time domain position of the CSI reference resource is determined based on a reference slot interval $n_{ref}$, wherein when downlink control information DCI that triggers the aperiodic CSI reporting and the aperiodic CSI reporting are not in a same slot, $n_{ref}$ is a minimum positive integer greater than or equal to $\lfloor Z'/N_{symb}^{slot} \rfloor$, $N_{symb}^{slot}$ represents a quantity of symbols comprised in one slot, and a value of $Z'$ is determined based on $N_{TRP}$.

**22.** The apparatus according to claim 20 or 21, wherein a value of at least one of $Z'$ and $Z$ satisfies one or more of the following:

satisfying a function relationship with a value of $N_{TRP}$;
being positively correlated with the value of $N_{TRP}$; and
having a correspondence with a value group of $N_{TRP}$.

**23.** The apparatus according to claim 20 or 21, wherein the transceiver unit is further configured to receive first capability information from the terminal device, wherein the first capability information indicates a CSI measurement and computation capability of the terminal device.

**24.** The apparatus according to claim 23, wherein a value of at least one of $Z'$ and $Z$ satisfies one or more of the following:

satisfying a function relationship with a value of $N_{TRP}$, wherein a value of one or more of parameters other than

$N_{TRP}$ in the function relationship is determined based on the first capability information; and
having a correspondence with a value group of $N_{TRP}$, wherein the correspondence between the value of at least one of $Z'$ and $Z$ and the value of $N_{TRP}$ is associated with the first capability information.

25. A communication apparatus, comprising a processor, a memory, an input interface, and an output interface, wherein the input interface is configured to receive information from a communication apparatus other than the communication apparatus, and the output interface is configured to output information to a communication apparatus other than the communication apparatus; and when a computer program stored in the memory is invoked by the processor, the method according to any one of claims 1 to 12 is implemented.

26. A computer-readable storage medium, wherein the computer-readable storage medium stores a computer program or computer instructions, and when the computer program or the computer instructions are executed by a processor, the method according to any one of claims 1 to 12 is implemented.

27. A computer program product, wherein the computer program product comprises instructions, and when the instructions are run by a processor, the method according to any one of claims 1 to 12 is implemented.

28. A chip system, comprising at least one processor, a memory, and an interface circuit, wherein the memory, the interface circuit, and the at least one processor are interconnected through a line, and the at least one memory stores instructions; and when the instructions are executed by the processor, the method according to any one of claims 1 to 12 is implemented.

29. A communication system, comprising a terminal device and a network device, wherein the terminal device is configured to perform the method according to any one of claims 1 to 6, and the network device is configured to perform the method according to any one of claims 7 to 12.

FIG. 1

FIG. 2a

Network
device 1

Network
device 2

Network
device 3

Terminal
device 1

Terminal
device 2

Terminal
device 3

FIG. 2b

| Network device | | Terminal device | |
|---|---|---|---|
| RRC | RRC signaling interaction | RRC | |
| MAC | MAC CE signaling interaction | MAC | |
| PHY | PDCCH and PDSCH | PHY | |
| | PUCCH and PUSCH | | |

FIG. 3

Network device

Terminal device

S401: First capability information

S402: First information, where the first information indicates a quantity $N_{TRP}$ of reference signal resources used for CSI measurement

S403: Determine a time domain position of a CSI reference resource based on the first information

FIG. 4

| Network device | | Terminal device |
|---|---|---|

S501: First capability information

S502: First information, where the first information indicates a quantity $N_{TRP}$ of reference signal resources used for CSI measurement

S503: Determine, based on the first information, a minimum interval Z between a time domain position of a resource on which aperiodic CSI reporting is performed and a time domain position of a resource on which DCI that triggers the aperiodic CSI reporting is located

FIG. 5

| Network device | | Terminal device |
|---|---|---|

S601: First capability information

S602: First information, where the first information indicates a quantity $N_{TRP}$ of reference signal resources used for CSI measurement

S603: Determine a time domain position of a CSI reference resource based on the first information and the first capability information

FIG. 6

Apparatus 700 for determining a CSI reference resource

Transceiver unit — 701

Processing unit — 702

FIG. 7

Apparatus 800 for determining a CSI
reference resource

Processing
unit — 801

Transceiver
unit — 802

**FIG. 8**

Apparatus 900 for determining a time
domain position interval

Transceiver
unit — 901

Processing
unit — 902

**FIG. 9**

Apparatus 1000 for determining a time
domain position interval

Processing
unit — 1001

Transceiver
unit — 1002

**FIG. 10**

1100

1101

Processor

Instructions

1103

1102

Memory

Instructions

1104

Transceiver

1105

Antenna

1106

FIG. 11

Antenna

1201

Control circuit

1200

Memory

Processor

1202

Input/Output apparatus

FIG. 12

## INTERNATIONAL SEARCH REPORT

| | |
|---|---|
| International application No. | |
| | **PCT/CN2024/076915** |

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 多, multi, TRP, CJT, 信道状态信息, CSI, 测量, measur+, 数量, number, 参考信号, CSI-RS, 上报, 报告, report+, 非周期, aperiod+, 时域位置, 符号, symbol, DCI, 间隔, interval

**C. DOCUMENTS CONSIDERED TO BE RELEVANT**

| Category* | Citation of document, with indication, where appropriate, of the relevant passages | Relevant to claim No. |
|---|---|---|
| X | WO 2021204208 A1 (VIVO MOBILE COMMUNICATION CO., LTD.) 14 October 2021 (2021-10-14) <br> description, page 1 lines 17-20, page 5 line 16-page 25 line 12 | 1-29 |
| A | CN 115150025 A (VIVO COMMUNICATION TECHNOLOGY CO., LTD.) 04 October 2022 (2022-10-04) <br> entire document | 1-29 |
| A | CATT. "On Rel-17 FeMIMO UE features" <br> *3GPP TSG RAN WG1 #106bis-e, R1-2109203*, 19 October 2021 (2021-10-19), <br> entire document | 1-29 |

☐ Further documents are listed in the continuation of Box C.　　☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **09 April 2024** | **15 April 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/076915**

| Patent document cited in search report | | | Publication date (day/month/year) | Patent family member(s) | | | Publication date (day/month/year) |
|---|---|---|---|---|---|---|---|
| WO | 2021204208 | A1 | 14 October 2021 | CN | 113517967 | A | 19 October 2021 |
| CN | 115150025 | A | 04 October 2022 | WO | 2022206504 | A1 | 06 October 2022 |
| | | | | US | 2024030985 | A1 | 25 January 2024 |
| | | | | EP | 4318997 | A1 | 07 February 2024 |

Form PCT/ISA/210 (patent family annex) (July 2022)

**REFERENCES CITED IN THE DESCRIPTION**

**Patent documents cited in the description**

- CN 202310215095